(19) Europäisches Patentamt
European Patent Office
Office européen des brevets

(11) **EP 4 317 577 A1**

(12) **EUROPEAN PATENT APPLICATION**
published in accordance with Art. 153(4) EPC


(43) Date of publication:
**07.02.2024 Bulletin 2024/06**

(21) Application number: **22780355.8**

(22) Date of filing: **23.03.2022**

(51) International Patent Classification (IPC):
***D06M 101/06*** (2006.01) ***C08L 1/16*** (2006.01)
***C08L 97/00*** (2006.01) ***C08L 101/00*** (2006.01)
***C08J 5/04*** (2006.01) ***C08K 3/013*** (2018.01)
***C08B 5/14*** (2006.01) ***D06M 11/55*** (2006.01)

(52) Cooperative Patent Classification (CPC):
**C08B 5/14; C08J 5/04; C08K 3/013; C08L 1/16; C08L 97/00; C08L 101/00; D06M 11/55;**
D06M 2101/06

(86) International application number:
**PCT/JP2022/013378**

(87) International publication number:
**WO 2022/210140 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021059316**



(71) Applicant: **Yokogawa Electric Corporation**
**Musashino-shi, Tokyo 180-8750 (JP)**

(72) Inventors:
- **MOCHIDUKI Makoto**
**Musashino-shi, Tokyo 180-8750 (JP)**
- **IGA Mitsuhiro**
**Musashino-shi, Tokyo 180-8750 (JP)**
- **TANAKA Hiroaki**
**Musashino-shi, Tokyo 180-8750 (JP)**
- **SAKO Takahiro**
**Musashino-shi, Tokyo 180-8750 (JP)**
- **OONO Fumi**
**Musashino-shi, Tokyo 180-8750 (JP)**

(74) Representative: **Grünecker Patent- und Rechtsanwälte**
**PartG mbB**
**Leopoldstraße 4**
**80802 München (DE)**


(54) **COMPOSITION COMPRISING CELLULOSE NANOFIBER AND LIGNIN OR COMPLEX OF THESE COMPONENTS, AND METHOD FOR PRODUCING LIGNOCELLULOSE-DERIVED MATERIAL**


(57) Provided is a composition comprising a cellulose nanofiber and a lignin or a complex thereof and a method for efficiently producing lignocellulose-derived materials from lignocellulosic biomass for completely using the lignocellulosic biomass. The present invention relates to a composition comprising a cellulose nanofiber having a sulfate ester group and a lignin-derived substance and a method for producing lignocellulose-derived materials.


EP 4 317 577 A1

Fig. 2

A

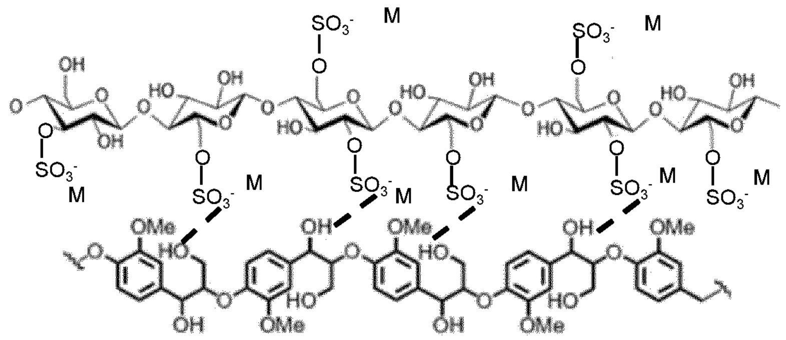

B

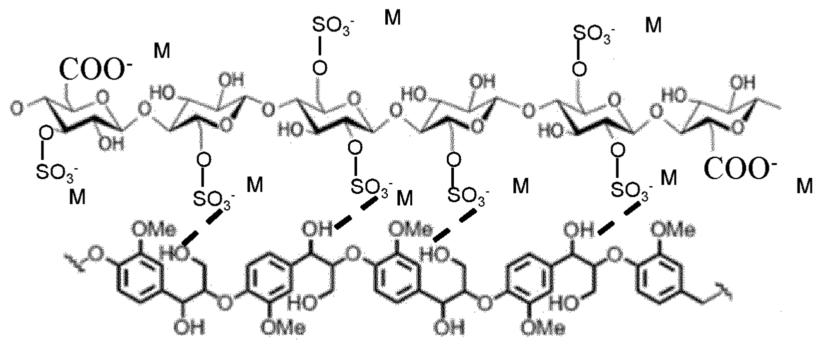

C

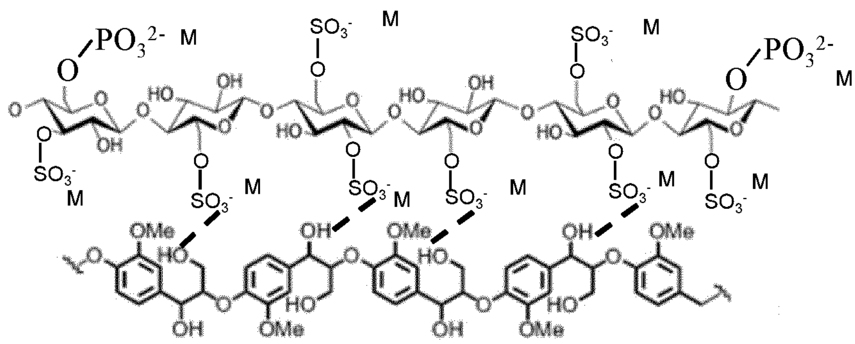

## Description

### Technical Field

The present invention relates to a composition comprising (containing) a cellulose nanofiber (also referred to as "CNF") and lignin or a complex of these components and a method for producing lignocellulose-derived materials.

### Background Art

Increasing environmental awareness has globally developed studies for the practical application of biomass-derived materials. For example, when lignocellulosic biomass, such as wooden materials (e.g., wood chips), herbs, palm shells, and nutshells, is used as a raw material, and if cellulose, lignin, and hemicellulose, which are components thereof, can be completely used in the industry, a great deal of contribution would be made for both the recycling-oriented resource utilization and the $CO_2$ fixation.

When the cellulose is a nanosized cellulose (also referred to as "nanocellulose"), such as a cellulose nanofiber and a cellulose nanocrystal (also referred to as "CNC"), and the cellulose is composited with a resin, a rubber, or, moreover, a concrete, the cellulose leads to improvements in various physical properties, such as strength, flexibility, and elongation ratio, and therefore, the cellulose has attracted attention as a novel material of an environmentally compatible type.

A lignin monomer (also referred to as "monolignol"), which is low in molecular weight, and a lignin oligomer with a relatively high molecular weight can be extracted from the lignin when the lignin is depolymerized (decomposed) while condensation of β-O-4 bond is suppressed. The monolignol can be used as a flavoring agent, such as vanillin, other than being used as various phenolic derivatives. The lignin oligomer and the lignin as it is on which a depolymerization treatment is not performed also have a phenolic resin skeleton, and therefore, their material applications in a mixed composition with a resin or a rubber or in a single body have been studied.

For example, Patent Literature 1 describes a method for producing a cellulose nanofiber that produces the cellulose nanofiber directly from lignocellulose.

Patent Literature 2 describes a sulfate-esterified cellulose nanofiber (sulfuric acid-esterified cellulose nanofiber) and a method for producing the cellulose nanofiber.

Patent Literature 3 describes a method for collecting cellulose, a lignin oligomer, monolignol, and hemicellulose from lignocellulose.

Patent Literature 4 describes a method for producing a cellulose nanocrystal from lignocellulose.

Thus, while the studies on methods for separating and producing each component of lignocellulosic biomass and applications thereof are ongoing, the studies for using the biomass completely are also underway.

For example, in Non Patent Literature 1, a complex of a cellulose nanofiber and lignin is studied.

In Non Patent Literature 2, a complex of a cellulose nanocrystal and lignin is studied.

### Citation List

#### Patent Literature

Patent Literature 1: JP 2008-308802 A
Patent Literature 2: JP 2020-41255 A
Patent Literature 3: WO 2017/178513
Patent Literature 4: WO 2012/014213

#### Non Patent Literature

Non Patent Literature 1: Wangxia Wang et al., "Lignin Redistribution for Enhancing Barrier Properties of Cellulose-Based Materials", Polymers 2019, 11, 1929

Non Patent Literature 2: Umesh Agarwal et al., "Production of high lignin-containing and lignin-free cellulose nanocrystals from wood", Cellulose, 2018, 25, 5791

Summary of Invention

Technical Problem

There are, however, various problems in using the lignocellulosic biomass completely.

For example, the TEMPO-oxidized cellulose nanofiber or the sulfate-esterified cellulose nanofiber derived from the lignocellulose, as described in Patent Literatures 1 and 2, as an elementary substance is poor in moldability and does not have sufficient compatibility with materials when the said cellulose nanofiber is composited with a material, such as a resin and a rubber.

The cellulose nanofiber in Non Patent Literature 1 is an unmodified cellulose nanofiber, and therefore, the said cellulose nanofiber has a weak interaction with lignin and has insufficient strength as a complex.

[Chem. 1]

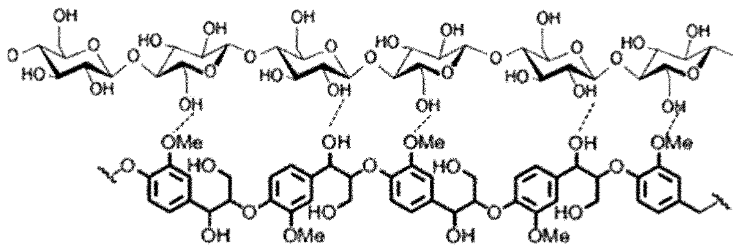

(In the formula, the thin dotted lines indicate that there exists a weak interaction between the unmodified cellulose and the lignin)

The cellulose nanocrystal in Patent Literature 2 is short in length and high in rigidity, and therefore, the complex of the cellulose nanocrystal and the lignin tends to be brittle in comparison to the complex of the cellulose nanofiber and the lignin.

Furthermore, in the method for producing nanocellulose in Patent Literatures 3 and 4, the common method is to use raw materials in which pulp and lignin components are isolated from lignocellulose by a pulping method, such as KP method and DP method. In this method, a drying step of the cellulose, a chemical treatment step of the cellulose, and a filtering and washing step are necessary when the cellulose nanofiber is produced, thereby requiring time and a great amount of energy. When the cellulose nanocrystal is produced, an acid hydrolysis reaction step of the cellulose takes time to lead to an increased production cost. Furthermore, the KP method and the DP method for isolating the pulp and lignin components progresses the condensation reaction of the lignin component, which is unstable, to cause a significant drop in the yield of the monolignol, which has a high utility value.

Therefore, in order to increase the production yield of the monolignol, the method for suppressing the condensation of β-O-4 bond by sufficiently swelling lignocellulose with a solvent or the like and protecting a hydroxyl group (OH group) of a lignin-derived substance has been studied, and Patent Literature 3 describes to cause an acetal reaction between an OH group of a lignin-derived substance and a protecting group, such as an aldehyde and a ketone, as a method for protecting the OH group of the lignin-derived substance.

The acetal reaction described in Patent Literature 3, however, is an equilibrated reaction, and therefore, once the protecting group, such as an aldehyde and a ketone, added in the beginning is consumed by the protection of the OH group of the lignin-derived substance by the acetal reaction, the chemical equilibrium is more likely to be biased toward deprotection. For biasing this chemical equilibrium toward protection, it is conceivable to prepare an excessive amount of protecting groups, such as an aldehyde and a ketone, but the protecting group, such as an aldehyde and a ketone, suppresses the swelling of the lignocellulose, and as the result, it fails to improve the production yield of the monolignol.

Fig. 1 illustrates an outline of a method for parallely producing lignocellulose-derived materials, that is, sulfate-esterified CNF, CNC, hemicellulose, and monolignol from lignocellulosic biomass based on the prior art.

Accordingly, an object of the present invention is to provide a composition comprising a cellulose nanofiber and lignin or a complex of these components and a method for efficiently producing lignocellulose-derived materials from lignocellulosic biomass for completely using the lignocellulosic biomass.

Solution to Problem

As described above, the cellulose nanofiber is poor in moldability when it is alone. Meanwhile, even though a

complex is produced by combining the cellulose nanofiber and the lignin-derived substance, when the cellulose nanofiber is an unmodified cellulose nanofiber (comprising OH groups), a TEMPO oxidized cellulose nanofiber (comprising carboxy groups (COOH groups), or a phosphate-esterified cellulose nanofiber (phosphoric acid-esterified cellulose nanofiber) (comprising phosphate ester groups), the interaction between the cellulose nanofiber and the lignin-derived substance is weak, and therefore, the strength of the complex is low.

[Chem. 2]

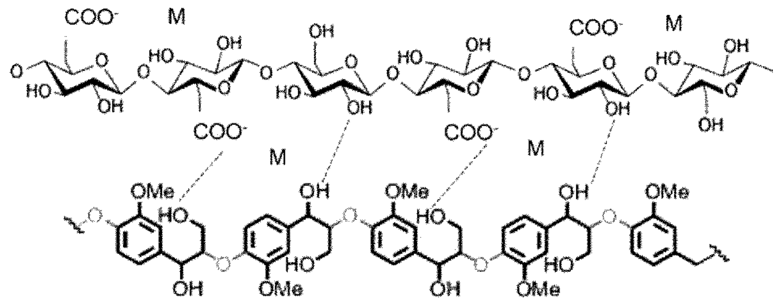

(In the formula, the thin dotted lines indicate that there exists a weak interaction between the TEMPO-oxidized cellulose and the lignin, and M indicates a monovalent to trivalent cation)

[Chem. 3]

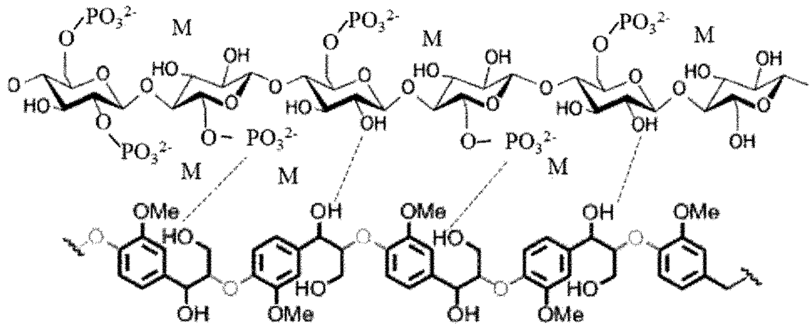

(In the formula, the thin dotted lines indicate that there exists a weak interaction between the phosphate-esterified cellulose and the lignin, and M indicates a monovalent to trivalent cation)

Therefore, the inventors have found that, as the result of intensive studies, the use of a cellulose nanofiber having a sulfate ester group(s) (also referred to as a "sulfate-esterified cellulose nanofiber") as a cellulose nanofiber allows a strong interaction between the cellulose nanofiber and the lignin-derived substance in a complex of the sulfate-esterified cellulose nanofiber and the lignin-derived substance (also referred to as a "sulfate-esterified cellulose nanofiber and lignin-derived substance complex"), thereby allowing an improvement in moldability.

[Chem. 4]

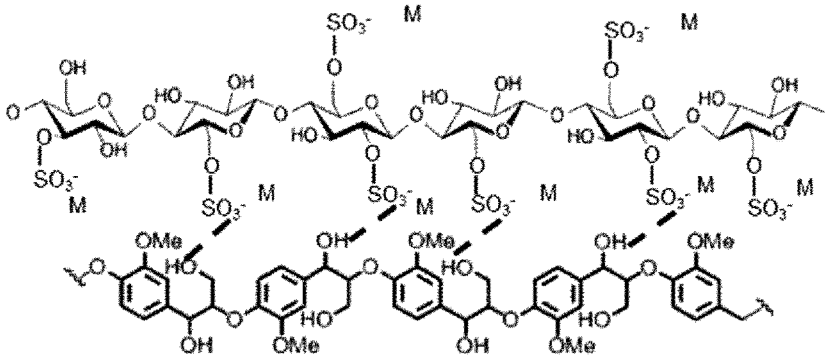

(In the formula, the thick dotted lines indicate that there exists a strong interaction between the sulfate-esterified cellulose and the lignin, and M indicates a monovalent to trivalent cation)

Furthermore, the inventors have found that executing a chemical treatment (sulfuric acid esterification treatment) of the cellulose simultaneously with the protection reaction of the OH group of the lignin-derived substance for suppressing the condensation reaction of the lignin in the lignocellulosic biomass during the production of the lignocellulose-derived materials from the lignocellulosic biomass allows achieving low energy and time reduction in the production of the biomass-derived material.

Furthermore, the inventors have found that executing the protection reaction of the OH group of the lignin-derived substance in the presence of dimethylsulfoxide (DMSO) as a solvent and acetic anhydride or propionic anhydride allows protecting the OH group of the lignin-derived substance without suppressing the swelling of the lignocellulose and the improved production yield of the monolignol.

Furthermore, the inventors have found a method for parallelly producing the sulfate-esterified cellulose nanofiber and lignin-derived substance complex, the sulfate-esterified cellulose nanocrystal, and the monolignol for completely using the lignocellulosic biomass.

That is, the gist of the present invention is as follows.

(1) A composition comprising a cellulose nanofiber having a sulfate ester group and a lignin-derived substance.
(2) The composition according to (1), in which the sulfate ester group of the cellulose nanofiber having the sulfate ester group is expressed by Chemical formula (1):

[Chem. 5]

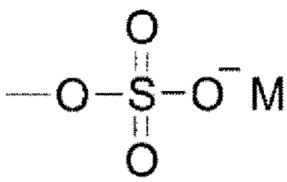

···(1)

(In the formula, M indicates a monovalent to trivalent cation).
(3) The composition according to (1) or (2), in which the cellulose nanofiber having the sulfate ester group and the lignin-derived substance form a complex.
(4) The composition according to (3), in which the complex is a complex in which the cellulose nanofiber having the sulfate ester group and the lignin-derived substance are hydrogen-bonded.
(5) The composition according to (3), in which the complex is a complex in which the cellulose nanofiber having the sulfate ester group and the lignin-derived substance are cross-linked.
(6) The composition according to any one of (1) to (5), further comprising at least one substance selected from the group consisting of resins and rubbers.
(7) The composition according to any one of (1) to (6), further comprising at least one filler selected from the group consisting of organic fillers and inorganic fillers.
(8) A method for producing the composition according to (4), comprising mixing the cellulose nanofiber having the sulfate ester group and the lignin-derived substance while shear force is applied.

(9) A method for producing lignocellulose-derived materials comprising:

(A) a step of mixing:

(a) lignocellulose having a lignin content rate of 20 percent by weight (weight%) or more based on a total weight of the lignocellulose;
(b) sulfuric acid;
(c) at least one compound selected from the group consisting of aldehydes, ketones, boronic acids, 2-methoxypropene, dimethyl carbonate, and 2,2-dimethoxypropane;
(d) dimethylsulfoxide as a solvent; and
(e) at least one carboxylic acid anhydride selected from the group consisting of acetic anhydride and propionic anhydride,

to prepare a mixture liquid and cause a reaction to obtain a reactant;
(B) a step of neutralizing the reactant obtained in Step (A) with a base to obtain a neutralized substance; and
(C) a step of separating the neutralized substance obtained in Step (B) into a first solid component and a first liquid component.

(10) The method according to (9), in which in Step (A), a proportion of the lignocellulose in the mixture liquid is 5 weight% to 50 weight% based on a total weight of the mixture liquid.
(11) The method according to (9) or (10), in which in Step (A), (b), (c), (a), and (e) are added into (d) in the listed order with time differences.
(12) The method according to any one of (9) to (11), in which in Step (A), (b), (c), (a), and (e) are added into (d) in the listed order and are mixed for 30 minutes or more to cause a reaction, and thereafter, are additionally added with (e) to cause a reaction.
(13) The method according to any one of (9) to (12), in which in Step (A), (b), (c), and (a) are added into (d) in the listed order, and then are mixed while being heated to 50°C or more to cause a reaction, and subsequently, are cooled down to 50°C or less, and thereafter, are added with (e) to cause a reaction.
(14) The method according to any one of (9) to (13), in which in Step (A), when an absorbance at a wavelength of 500 nm of a solution obtained by diluting a solution part in the reactant of (d), (b), (c), (a), and (e) 20 times becomes 0.5 or more, Step (B) is performed.
(15) The method according to any one of (9) to (14), further comprising (D) a step of mixing a complex consisting of a cellulose having a sulfate ester group and a lignin-derived substance, in which the cellulose having the sulfate ester group and the lignin-derived substance are cross-linked, comprised in the first solid component obtained in Step (C), and water or an organic solvent, or a mixture liquid thereof while shear force is applied, and defibrating the mixture to obtain a complex comprising a cellulose nanofiber having the sulfate ester group and the lignin-derived substance.
(16) The method according to any one of (9) to (15), further comprising (D') a step of mixing a complex consisting of a cellulose having a sulfate ester group and a lignin-derived substance, in which the cellulose having the sulfate ester group and the lignin-derived substance are cross-linked, comprised in the first solid component obtained in Step (C), water or an organic solvent, or a mixture liquid thereof, and sulfuric acid, and heating the mixture to obtain a sulfate-esterified cellulose nanocrystal.
(17) The method according to any one of (9) to (16), further comprising (D") a step of mixing the first solid component obtained in Step (C) and a THF solvent to obtain a suspension and separating the obtained suspension into a second solid component comprising a cellulose and a second liquid component, and a step of depolymerizing an uncross-linked lignin-derived substance in the separated second liquid component to obtain monolignol.
(18) A complex consisting of a cellulose nanofiber having a sulfate ester group and a lignin-derived substance, in which the cellulose nanofiber having the sulfate ester group and the lignin-derived substance are interacted in the complex.
(19) The complex according to (18), in which the cellulose nanofiber having the sulfate ester group and the lignin-derived substance are hydrogen-bonded.
(20) The complex according to (18), in which the cellulose nanofiber having the sulfate ester group and the lignin-derived substance are cross-linked.

The present description encompasses the content disclosed in Japanese Patent Application No. 2021-059316, which is a priority document of the present application.

Advantageous Effects of Invention

The present invention provides a composition comprising a cellulose nanofiber and lignin or a complex of these components and a method for efficiently producing lignocellulose-derived materials from lignocellulosic biomass for completely using the lignocellulosic biomass.

Brief Description of Drawings

Fig. 1 is a scheme illustrating an outline of a method for parallelly producing lignocellulose-derived materials from lignocellulosic biomass based on the prior art.
Fig. 2 is drawings illustrating exemplary embodiments of hydrogen-bonded complexes of the present invention.
Fig. 3 is drawings illustrating exemplary embodiments of hydrogen-bonded complexes of the present invention.
Fig. 4 is a drawing illustrating an exemplary embodiment of a cross-linked complex of the present invention.
Fig. 5 is drawings illustrating exemplary embodiments of compositions of the present invention.
Fig. 6 is a scheme illustrating one example of a method for producing the hydrogen-bonded complex of the present invention.
Fig. 7 is a scheme illustrating one example of a method for producing the lignocellulose-derived material of the present invention.
Fig. 8 is a scheme illustrating one example of a method for parallelly producing the lignocellulose-derived materials of the present invention.
Fig. 9 is a scheme illustrating one example of a method for parallelly producing the lignocellulose-derived materials of the present invention.
Fig. 10 is a drawing illustrating one example of a system of the present invention.
Fig. 11 is a drawing illustrating one example of a control system for the system of the present invention.

Description of Embodiments

The following describes preferred embodiments of the present invention in detail.
In this description, the features of the present invention are described with reference to the drawings as necessary. In the drawings, dimensions and shapes of respective portions are exaggerated for clarity and the actual dimensions and shapes are not accurately depicted. Accordingly, the technical scope of the present invention is not limited to the dimensions and shapes of the respective portions represented in these drawings. Note that a composition comprising a cellulose nanofiber and lignin or a complex of these components and a method for producing lignocellulose-derived materials of the present invention are not limited to the following embodiments, and can be implemented in various configurations with changes, improvements, and the like that may be made by a person skilled in the art within a range without departing from the gist of the present invention.
The present invention relates to a composition comprising a cellulose nanofiber having a sulfate ester group(s) and a lignin-derived substance.
Here, the cellulose is a polysaccharide in which glucose is linked by β-1,4 glycosidic bond and is represented by $(C_6H_{10}O_5)_n$.
The cellulose nanofiber is a fiber configured of the cellulose and has a fiber width (fiber diameter (equivalent circle diameter)) of usually 1 nm to 500 nm and a fiber length of usually 0.1 μm to 6 μm.
Note that, in this description and the like, the ranges expressed in "a numerical value to a numerical value" mean the ranges including those numerical values. For example, "1 nm to 500 nm" described above indicates "1 nm or more and 500 nm or less," that is, the range of 1 nm to 500 nm including 1 nm and 500 nm.
While the fiber width and fiber length are not limited, the fiber width and fiber length can be measured by measuring the fiber widths and fiber lengths in randomly selected 50 fibers using, for example, an atomic force microscope (SPM-9700HT, manufactured by Shimadzu Corporation) and calculating respective arithmetic mean values.
The cellulose nanofiber having the sulfate ester group is also referred to as a sulfate-esterified cellulose nanofiber (sulfuric acid-esterified cellulose nanofiber) and is a cellulose nanofiber in which at least one of OH groups in the cellulose constituting the cellulose nanofiber is substituted by the sulfate ester group. The sulfate ester group of the cellulose nanofiber having the sulfate ester group is preferred to be a sulfate ester group expressed by the following formula (1) (in the formula, M indicates a monovalent to trivalent cation)

[Chem. 6]

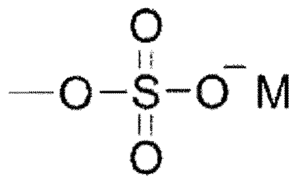

···(1)

Examples of the monovalent to trivalent cation expressed as M in the formula (1) include a hydrogen ion, a metal ion, an ammonium ion, and the like. Note that, when M is a divalent or trivalent cation, the cation forms an ionic bond with two or three $-OSO_3$-.

Examples of the metal ion include an alkali metal ion, an alkaline earth metal ion, a transition metal ion, and other metal ions.

Here, examples of the alkali metal include lithium, sodium, potassium, rubidium, cesium, and the like. Examples of the alkaline earth metal include calcium, strontium, and the like. Examples of the transition metal include iron, nickel, palladium, copper, argentum, and the like. Examples of other metals include beryllium, magnesium, zinc, aluminum, and the like.

Examples of the ammonium ion include, not only $NH_4^+$, but also an ammonium ion derived from various amines generated by one or more hydrogen atoms of $NH_4^+$ being substituted by an organic group, and include, for example, $NH_4^+$, a quaternary ammonium cation, an alkanolamine ion, a pyridinium ion, and the like.

The cation denoted by M is preferred to be a hydrogen ion, a sodium ion, a potassium ion, a calcium ion, or a quaternary ammonium cation from the aspect of strong interaction with lignin and high workability. Any one of the cations listed above may be used or a combination of two types or more of the cations listed above may be used.

The cellulose nanofiber having the sulfate ester group may have another substituent other than the sulfate ester group. Here, when the cellulose nanofiber having the sulfate ester group has another substituent, the other substituent is substituted with at least one of the OH groups in the cellulose constituting the cellulose nanofiber. Examples of the other substituent are not limited, but include, for example, an anionic substituent and its salt, an ester group, an ether group, an acyl group, an aldehyde group, an alkyl group, an alkylene group, an aryl group, a combination of two or more types thereof, and the like. When the other substituent is the combination of two or more types, the content ratio of each substituent is not limited. The other substituent is preferred to be an anionic substituent and its salt, or an acyl group from the aspect of nano dispersibility among all. The anionic substituent and its salt are preferred to be, in particular, a carboxy group, a phosphoester group, a phosphite ester group, and a xanthate group. When the anionic substituent is in a form of salt, it is particularly preferred to be sodium salt, potassium salt, and calcium salt from the aspect of nano dispersibility. A particularly preferred acyl group is preferred to be an acetyl group from the aspect of nano dispersibility.

The sulfuric acid esterification modification ratio in the cellulose nanofiber having the sulfate ester group can be set to any appropriate value depending on the application or the like. The sulfuric acid esterification modification ratio of the cellulose nanofiber having the sulfate ester group can be expressed in the sulfur content rate (weight%) in the cellulose nanofiber. The sulfur content rate (weight%) in the sulfuric acid-esterification modified cellulose nanofiber is not limited, but is usually 0.05 weight% to 30 weight%, preferably 0.1 weight% to 25 weight%, more preferably 0.5 weight% to 22 weight%. When the sulfur content rate is higher than 30 weight%, the crystallinity and the heat resistance may be reduced. When the sulfur content rate is less than 0.05 weight%, the interaction between the sulfate ester group in the cellulose nanofiber and the lignin-derived substance may fail to be sufficiently obtained.

The sulfur content rate (weight%) in the cellulose nanofiber can be calculated by, for example, combustion and absorption-ion chromatography (IC) method. Alternatively, the sulfur content rate (weight%) in the cellulose nanofiber can be confirmed by infrared spectroscopy (IR). The sulfur content rate of the cellulose nanofiber having the sulfate ester group can be, for example, measured in the following method.

·Measuring method: Combustion and absorption-IC
·Measurement device: ICS-1500 manufactured by Nippon Dionex K.K.
·Measuring condition: Weigh a sample on a magnetic board, burn it in a ring furnace (1350°C) under an oxygen atmosphere (flow rate: 1.5 L/minute), and cause a hydrogen peroxide 3% water (20 ml) to absorb a generated gas component(s) to obtain an absorption liquid. The obtained absorption liquid is diluted to 100 ml in measuring cylinder with pure water and the dilute solution is provided to an ion chromatography. From the measurement result, a sulfate ion concentration to the cellulose nanofiber is calculated. Furthermore, the sulfate ion concentration is converted to the sulfur content rate with the following formula. Note that, the detection limit of the sulfate ion concentration based

on the cellulose with this method is 0.01 weight%. Therefore, the minimum determination limit of the sulfur content rate converted from the sulfate ion concentration is 0.01 weight%. Therefore, the cellulose nanofiber having the sulfate ester group with the sulfur content rate of less than 0.01 weight% may be an unmodified (that is, not sulfuric acid-esterification modified) cellulose nanofiber.

·

$$\text{Sulfur content rate (weight\%)} = \text{sulfate ion concentration} \times 32/96$$

The average fiber diameter of the cellulose nanofiber having the sulfate ester group of the present invention is equal to the fiber diameter of the cellulose nanofiber defined above and is usually in the range of 1 nm to 500 nm. The average fiber diameter of the cellulose nanofiber is preferably 2 nm to 100 nm, more preferably 3 nm to 50 nm, even more preferably 5 nm to 20 nm. When the average fiber diameter is less than 1 nm, the performance, such as the strength of the nanofiber, may also be reduced. When the average fiber diameter exceeds 500 nm, the performance as the nanofiber is less likely to be exhibited as the fiber diameter is large. Note that the average fiber diameter is a value obtained by randomly selecting 50 fibers from an atomic force microscope image and arithmetically averaging them, similarly to the cellulose nanofiber described above.

The crystallinity of the cellulose nanofiber having the sulfate ester group of the present invention may depend on the raw material cellulose to be used. For example, cotton cellulose may have a high original crystallinity compared with that of wood cellulose. That is, the crystallinity of the cellulose nanofiber varies depending on the raw material cellulose to be used. The crystallinity of the cellulose nanofiber, however, determines the performances of the cellulose nanofiber, such as its uniformization with the lignin-derived substance, workability, heat resistance, reinforcement effect and the like, and therefore, the crystallinity of the cellulose nanofiber is usually 20% to 99%, preferably 30% to 95%, more preferably 40% to 90%, even more preferably 50% to 85%. When the crystallinity is lower than 20%, the heat resistance and the rigidity of the cellulose nanofiber may be reduced. On the other hand, when the crystallinity exceeds 99%, the uniformization with the lignin-derived substance becomes difficult.

The lignin is a network polymer compound generated by condensation of a constituent unit body having phenylpropane as a frame and is an unmodified composition before it is taken out of natural biomass. The lignin has a structure in which guaiacyl nucleus (G nucleus), syringyl nucleus (S nucleus), and p-hydroxyphenyl nucleus (H nucleus or P nucleus) of an aromatic nucleus unit are bonded in a proportion specific to the type of each biomass.

The lignin-derived substance is a compound extracted by any method from natural biomass and involves denaturation in a part of substituents in a molecule. A compound in which a part of substituents in a molecule of the lignin-derived substance extracted from the biomass is further substituted by any method is also classified as the lignin-derived substance. Examples of the lignin-derived substance include, for example, kraft lignin, lignosulfonic acid, soda lignin, soda anthraquinone lignin, sulphuric (sulfuric) acid lignin, glycol lignin, enzymatic hydrolysis lignin, hydrothermally treated lignin, steam explosion treated lignin, organosolv lignin, and their salt, and the like.

The weight average molecular weight of the lignin is not limited, but usually 1,500 to 500,000, preferably 10,000 to 200,000. When the weight average molecular weight of the lignin falls below 1,500, the lignin easily becomes brittle as a composition, and when the weight average molecular weight of the lignin exceeds 500,000, the uniform dispersion is less likely to be achieved when the lignin is mixed with cellulose.

The composition of the present invention comprises the cellulose nanofiber having the sulfate ester group in an amount of usually 0.03 weight% to 85 weight%, preferably 5 weight% to 50 weight% based on the total weight of the composition.

The composition of the present invention comprises the lignin-derived substance in an amount of usually 0.03 weight% to 85 weight%, preferably 5 weight% to 50 weight% based on the total weight of the composition.

In the composition of the present invention, the weight ratio of the cellulose nanofiber having the sulfate ester group to the lignin-derived substance (the cellulose nanofiber having the sulfate ester group:the lignin-derived substance) is usually 0.05:99.5 to 85.0: 15.0, preferably 5.0:95.0 to 50.0:50.0.

Comprising the cellulose nanofiber having the sulfate ester group and the lignin-derived substance in the composition of the present invention allows a strong interaction between the sulfate ester group and the OH group of the lignin-derived substance because of a smaller acid dissociation constant of the sulfate ester group of the sulfate-esterified cellulose nanofiber when compared with those of the OH group, the COOH group, and the phosphoester group. Also, by such, the compatibility between the sulfate-esterified cellulose and the lignin can be improved. Accordingly, comprising the cellulose nanofiber having the sulfate ester group and the lignin-derived substance in the above-described contents in the composition of the present invention forms a strong interaction between the $SO_4$ group comprised in the cellulose nanofiber having the sulfate ester group and the OH group comprised in the lignin-derived substance, thereby allowing a further improvement in moldability when molding is performed using the composition.

Note that, the present invention is to use the strong interaction (hydrogen bonding) formed between the $SO_4$

group comprised in the cellulose nanofiber having the sulfate ester group and the OH group comprised in the lignin-derived substance, and therefore, the composition of the present invention includes a combination or composition in which the cellulose nanofiber having the sulfate ester group and the lignin-derived substance exhibit a combined state as the result, for example, a combination or composition that comprises the cellulose nanofiber having the sulfate ester group and the lignin-derived substance in respective solid forms, which is, for example, used by being added in a solvent.

The present invention also relates to a complex of the cellulose nanofiber having the sulfate ester group and the lignin-derived substance (a sulfate-esterified cellulose nanofiber and lignin-derived substance complex) and a composition comprising the complex.

The complex of the cellulose nanofiber having the sulfate ester group and the lignin-derived substance is a complex consisting of the cellulose nanofiber having the sulfate ester group and the lignin-derived substance and in which the cellulose nanofiber having the sulfate ester group and the lignin-derived substance interacts with one another.

In the complex in the present invention, examples of the interaction between the respective materials include a hydrogen bond, an ionic bond, a covalent bond, a dipole interaction, and the like.

For example, examples of the complex in the present invention include a complex in which the cellulose nanofiber having the sulfate ester group and the lignin-derived substance are hydrogen-bonded (also referred to as a "hydrogen-bonded complex").

The hydrogen bond is an attractive interaction formed between S and/or O in the $SO_4$ group comprised in the cellulose nanofiber having the sulfate ester group and H in the OH group comprised in the lignin-derived substance.

In the hydrogen-bonded complex in the present invention, the weight ratio of the cellulose nanofiber having the sulfate ester group to the lignin-derived substance (the cellulose nanofiber having the sulfate ester group:the lignin-derived substance) is usually 0.05:99.5 to 85.0:15.0, preferably 5.0:95.0 to 50.0:50.0.

The weight ratio of the respective materials in the hydrogen-bonded complex in the present invention falling within the above-described range forms a stronger hydrogen bond between the $SO_4$ group comprised in the cellulose nanofiber having the sulfate ester group and the OH group comprised in the lignin-derived substance, and thus, the moldability can be further more improved when molding is performed using the composition.

For example, examples of the complex in the present invention include a complex in which the cellulose nanofiber having the sulfate ester group and the lignin-derived substance are cross-linked (also referred to as a "cross-linked complex").

The cross-linkage (cross-linked) indicates to form a chemical bond by causing a condensation reaction or an addition reaction between a hydroxy group of the cellulose and a hydroxy group, an aldehyde group, a carboxy group, a methoxy group, a carbonyl group, an alkene moiety, or an ether moiety of the lignin-derived substance.

The type of the chemical bond is not limited as long as the bond is held, and the bond is formed via one or more types of crosslinking agents.

Examples of the bond type are not limited, but include, for example, a urethane bond, an ester bond, an ether bond, an amide bond, a urea bond, and the like.

In the cross-linked complex in the present invention, the weight ratio of the cellulose nanofiber having the sulfate ester group to the lignin-derived substance (the cellulose nanofiber having the sulfate ester group:the lignin-derived substance) is usually 0.05:99.5 to 85.0:15.0, preferably 5.0:95.0 to 50.0:50.0.

The weight ratio of the respective materials of the cross-linked complex in the present invention falling within the above-described range further strengthens the bond between the respective materials in addition to the strong interaction formed between the $SO_4$ group comprised in the cellulose nanofiber having the sulfate ester group and the OH group comprised in the lignin-derived substance (the hydrogen bond), and thus, allows an even more improvement in moldability when molding is performed using the composition.

The weight average molecular weight of the cross-linked complex is not limited, but is usually 1,000 to 200,000, preferably 10,000 to 100,000. When the weight average molecular weight of the cross-linked complex is less than 1,000, the complex is likely to become brittle, and when the weight average molecular weight of the cross-linked complex exceeds 200,000, the cross-linkage is excessive, and therefore, is hard and reduces the workability.

In the cross-linked complex, formation of the cross-linkage is not specifically limited, but can be confirmed by identifying the bond derived from the cross-linked structure or changes in physical constants and/or physical properties derived from the cross-linkage, using such as infrared spectroscopy, near-infrared spectroscopy, Raman spectroscopy, NMR, elementary analysis, GPC, and DSC.

The composition of the present invention may further comprise an additive, in addition to the cellulose nanofiber having the sulfate ester group and the lignin-derived substance or the complex thereof.

Examples of the additive are not limited, but include, for example, at least one substance selected from the group consisting of resins and rubbers, at least one filler selected from the group consisting of organic fillers and inorganic fillers, and the like.

Examples of resins and rubbers are not limited, but include, for example, phenolic resins, melamine resins, urea resins, alkyd resins, epoxy resins, unsaturated polyester resins, polyurethane resins, polyethylene resins (e.g.,

high-density polyethylene, medium-density polyethylene, low-density polyethylene), polypropylene resins, polystyrene resins, acrylic resins, polyvinyl alcohols, acrylamide resins, silicone resins, natural rubbers, synthetic rubbers, and the like.

Examples of the organic fillers are not limited, but include, for example, functional compounds, such as pigments, UV absorbers, antioxidants, antistatic agents, and surfactants, made of organic matters, other than the resins and rubbers described above in a form of granule.

Examples of the inorganic fillers are not limited, but include, for example, silica, mica, talc, clay, carbon, carbonate, for example, calcium carbonate, magnesium carbonate, oxide, for example, aluminum oxide, titanium oxide, zinc oxide, iron oxide, ceramic, for example, ferrite.

The composition of the present invention comprises usually 0.1 weight% to 10.0 weight%, preferably 0.5 weight% to 5.0 weight% of the additive based on the total weight of the composition.

Comprising the inorganic filler or the organic filler of the granulated resin and/or rubber as the additive in the composition of the present invention allows an improvement in the moldability, in particular, breaking strength, when the composition of the present invention is molded. When the organic filler is a functional compound, providing properties specific to the various functional compounds and the compatibility between the breaking strength and the bending resistance are achieved at the same time.

Figs. 2 to 5 illustrate examples of embodiments of the present invention. Fig. 2A illustrates an exemplary complex in which a cellulose nanofiber having sulfate ester groups and a lignin-derived substance are hydrogen-bonded (hydrogen-bonded complex). Fig. 2B illustrates an exemplary complex in which a cellulose nanofiber having sulfate ester groups and carboxy groups and a lignin-derived substance are hydrogen-bonded (hydrogen-bonded complex). Fig. 2C illustrates an exemplary complex in which a cellulose nanofiber having sulfate ester groups and phosphoester groups and a lignin-derived substance are hydrogen-bonded (hydrogen-bonded complex). Fig. 3D illustrates an exemplary complex in which a cellulose nanofiber having sulfate ester groups and acetyl groups and a lignin-derived substance are hydrogen-bonded (hydrogen-bonded complex). Fig. 3E illustrates an exemplary complex in which a cellulose nanofiber having sulfate ester groups, phosphoester groups, and acetyl groups and a lignin-derived substance are hydrogen-bonded (hydrogen-bonded complex). In the complexes in Figs. 2A to 2C and Figs. 3D to 3E, a strong electrostatic interaction is generated between the sulfate ester groups of the cellulose nanofiber having the sulfate ester groups and the OH groups of the lignin-derived substance, and the interaction leads to the improved strength of the complex itself. The complexes also have the flexibility at the same time. Fig. 4F illustrates an exemplary complex in which a cellulose nanofiber having sulfate ester groups and a lignin-derived substance are cross-linked (cross-linked complex). In the complex in Fig. 4F, in addition to the strong electrostatic interaction between the sulfate ester groups of the cellulose nanofiber having the sulfate ester groups and the OH groups of the lignin-derived substance, the strength of the complex itself is further improved due to the cross-linkage. On the other hand, the complex also has the flexibility at the same time. Fig. 5G illustrates an exemplary composition comprising the complex of the cellulose nanofiber having the sulfate ester groups and the lignin-derived substance, and a resin. Fig. 5H illustrates an exemplary composition comprising the complex of the cellulose nanofiber having the sulfate ester groups and the lignin-derived substance, and an inorganic filler and an organic filler. Fig. 5I illustrates an exemplary composition comprising the complex of the cellulose nanofiber having the sulfate ester groups and the lignin-derived substance, a resin, and an inorganic filler and an organic filler.

The complexes according to the present invention are moldable and can be used in usages of various casings and containers. Since the complexes according to the present invention are also moldable into a sheet shape, the complexes according to the present invention can be used for packaging by the complex of the present invention itself or being layered with a paper and the like.

The present invention also relates to a method for producing a complex of a cellulose nanofiber having a sulfate ester group and a lignin-derived substance, a composition comprising the cellulose nanofiber having the sulfate ester group and the lignin-derived substance or the complex thereof, or a lignocellulose-derived material(s).

As one embodiment of the present invention, the method for producing the composition of the present invention includes mixing, preferably mixing while applying shear force, the cellulose nanofiber having the sulfate ester group and the lignin-derived substance. At this time, the additive described above may also be added as necessary.

As the cellulose nanofiber having the sulfate ester group, those described above may be used. As the cellulose nanofiber having the sulfate ester group, the cellulose nanofiber having the sulfate ester group described, for example, in Patent Literature 2 may be used.

As the lignin-derived substance, those described above may be used. As the lignin-derived substance, for example, Indulin AT (manufactured by Sigma Aldrich), alkali lignin (manufactured by Sigma Aldrich), ligninsulfonic acid (manufactured by Tokyo Chemical Industry Co., Ltd.), glycol lignin (manufactured by LignoMateria Co., Ltd), and the like may be used.

In the present invention, for example, the cellulose nanofiber having the sulfate ester group and the lignin-derived substance are added in a container in which a solvent, for example, water, dimethylsulfoxide, dimethylformamide, ethylene glycol, diethyl ether, dioxane, tetrahydrofuran, or methyltetrahydrofuran, is optionally added such that the ratio of each of the materials in the above-described composition is preferably obtained, and are mixed by using a device

that can apply shear force to each material, for example, a stirrer, a triple roll mill, a biaxial kneader, a three-axis planetary kneader, a disperser, a paint shaker, a bead mill, a cutter mixer, or a planetary mixer.

The mixing conditions are not limited, therefore, known conditions for a person skilled in the art may be used, and, for example, the mixing may be performed usually at 20°C to 150°C for usually five minutes to one hour.

The above-described producing method of the present invention allows producing the complex or the composition of the present invention, that is, the cellulose nanofiber having the sulfate ester group and the lignin-derived substance or the complex thereof, in particular, the complex in which the cellulose nanofiber having the sulfate ester group and the lignin-derived substance are hydrogen-bonded or the composition comprising the complex.

Fig. 6 illustrates an exemplary method for producing the hydrogen-bonded complex according to the above-described embodiment of the present invention. In Fig. 6, a sulfate-esterified cellulose nanofiber is prepared from a commercially available pulp, and the prepared sulfate-esterified cellulose nanofiber and a commercially available lignin derivative are mixed while shear force is applied, and thus, a complex of the sulfate-esterified cellulose nanofiber and the lignin derivative is prepared.

As one embodiment of the present invention, a method for producing lignocellulose-derived materials of the present invention includes:

(A) a step of mixing:

(a) lignocellulose having a lignin content rate of 20 weight% or more based on a total weight of the lignocellulose;
(b) sulfuric acid;
(c) at least one compound selected from the group consisting of aldehydes, ketones, boronic acids, 2-methoxypropene, dimethyl carbonate, and 2,2-dimethoxypropane;
(d) dimethylsulfoxide as a solvent; and
(e) at least one carboxylic acid anhydride selected from the group consisting of acetic anhydride and propionic anhydride,

to prepare a mixture liquid and cause a reaction to obtain a reactant;
(B) a step of neutralizing the reactant obtained in Step (A) with a base to obtain a neutralized substance;
(C) a step of separating the neutralized substance obtained in Step (B) into a first solid component and a first liquid component.

First, in Step (A), (a) the lignocellulose having the lignin content rate of 20 weight% or more based on the total weight of the lignocellulose; (b) the sulfuric acid; (c) the at least one compound selected from the group consisting of the aldehydes, ketones, boronic acids, 2-methoxypropene, dimethyl carbonate, and 2,2-dimethoxypropane; (d) the dimethylsulfoxide as the solvent; (e) the at least one carboxylic acid anhydride selected from the group consisting of acetic anhydride and propionic anhydride are mixed to prepare the mixture liquid and the reaction is caused to protect an OH group(s) of a lignin-derived substance, sulfate ester modify a cellulose nanofiber, and cross-link the cellulose nanofiber having the sulfate ester group and the lignin-derived substance.

The lignocellulose of (a) in Step (A) is lignocellulose having the lignin content rate of 20 weight% or more based on the total weight of the lignocellulose. The lignocellulose of (a) preferably has the lignin content rate of 20 weight% or more, in particular, 30 weight% or more based on the total weight of the lignocellulose. As the lignocellulose of (a), for example, wood chips from which bark is removed may be used, and in addition to those distributed as gardening materials as pine wood chips, cedar wood chips, cypress wood chips, or birch wood chips, the lignocellulose is also available as offcuts. Nutshells or the like are available as wastes from food-processing plants.

The proportion of the lignocellulose of (a) in the mixture liquid of (a), (b), (c), (d), and (e) in Step (A) is not limited, but is usually 5 weight% to 50 weight%, preferably 15 weight% to 30 weight% based on the total weight of the mixture liquid of (a), (b), (c), (d), and (e).

The lignin content rate and the content in the mixture liquid of the lignocellulose of (a) in Step (A) falls within the above-described ranges, and thus, not only the complex of the cellulose nanofiber having the sulfate ester group and the lignin-derived substance, but also monolignol, which is high in utility value, can be efficiently collected.

The compound of (b) in Step (A) is the sulfuric acid.

The proportion of the sulfuric acid of (b) in the mixture liquid of (a), (b), (c), (d), and (e) in Step (A) is not limited but is usually 0.5 weight% to 3.0 weight% based on the total weight of the mixture liquid of (a), (b), (c), (d), and (e).

The content in the mixture liquid of the sulfuric acid of (b) in Step (A) falls within the above-described range, and thus, the cellulose can be efficiently sulfate-esterified.

The compound of (c) in Step (A) is the at least one compound selected from the group consisting of the aldehydes, ketones, boronic acids, 2-methoxypropene, dimethyl carbonate, and 2,2-dimethoxypropane.

In the compound of (c), examples of the aldehydes are not limited, but include formaldehyde, propionaldehyde,

benzaldehyde, acetaldehyde, butanal, pentanal, and the like.

In the compound of (c), examples of the ketones are not limited, but include acetone, methyl ethyl ketone, and the like.

In the compound of (c), examples of the boronic acids are not limited, but include phenylboronic acid, methylboronic acid, 2-thiopheneboronic acid, and the like.

The proportion of the compound of (c) in the mixture liquid of (a), (b), (c), (d), and (e) in Step (A) is not limited but is usually 0.5 weight% to 10.0 weight% based on the total weight of the mixture liquid of (a), (b), (c), (d), and (e).

The type and the content in the mixture liquid of the compound of (c) in Step (A) falls within the above-described ranges, and thus, the OH group of the lignin-derived substance can be efficiently protected.

The solvent of (d) in Step (A) is the dimethylsulfoxide (DMSO).

The proportion of the solvent of (d) in the mixture liquid of (a), (b), (c), (d), and (e) in Step (A) is not limited, but is usually 40.0 weight% to 85.0 weight% based on the total weight of the mixture liquid of (a), (b), (c), (d), and (e).

The type and the content in the mixture liquid of the solvent of (d) in Step (A) falls within the above-described range, and thus, the solvent can efficiently swell the lignocellulose to enhance the extraction efficiency of the lignin component.

The carboxylic acid anhydride of (e) in Step (A) is the at least one carboxylic acid anhydride selected from the group consisting of acetic anhydride and propionic anhydride. The carboxylic acid anhydride may further comprise TFA, oxalyl chloride, or halogens in addition to pivalic anhydride or benzoic anhydride.

The proportion of the carboxylic acid anhydride of (e) in the mixture liquid of (a), (b), (c), (d), and (e) in Step (A) is not limited, and is usually 3.0 weight% to 15.0 weight% based on the total weight of the mixture liquid of (a), (b), (c), (d), and (e).

The type and the content in the mixture liquid of the compound of (e) in Step (A) falls within the above-described range, and thus, the OH group of the lignin-derived substance can be efficiently protected.

The mixing conditions and the reactive conditions of (a), (b), (c), (d), and (e) in Step (A) are not limited. For example, in Step (A), (a), (b), (c), (d), and (e) are mixed and reacted at usually 50°C to 120°C for usually 0.5 hours to 5.0 hours.

In Step (A), it is preferred to add (b), (c), (a), and (e) in (d) in the respectively listed order with time differences.

Here, "add(ing) the materials with the time differences" indicates that after one material is added, the next material is added after a lapse of usually 1 minute to 60 minutes, preferably 5 minutes to 30 minutes.

In Step (A), adding (b), (c), (a), and (e) in (d) in the respectively listed order with the time differences allows an improvement in moldability, in particular, bending resistance when the obtained lignocellulose-derived materials, in particular, the complex consisting of the cellulose nanofiber having the sulfate ester group and the lignin-derived substance in which the cellulose nanofiber having the sulfate ester group and the lignin-derived substance are cross-linked, or the composition comprising the complex is molded. Furthermore, the protection reaction of the β-O-4 bond of the lignin-derived substance also efficiently progresses, and therefore, the yield of the lignin monomer is also improved.

In Step (A), (b), (c), (a), and (e) are added into (d) in the listed order, and are mixed for usually 30 minutes or more, preferably 60 minutes or more, and usually 120 minutes or less, preferably 90 minutes or less to cause a reaction, and thereafter, are additionally added with (e) to cause a reaction, preferably are additionally added with (e) to further mix, preferably mix for usually 30 minutes to 120 minutes to cause a reaction.

In Step (A), adding (b), (c), (a), and (e) in (d) in the listed order, and after a lapse of certain period of time, additionally adding (e) to cause a reaction effectively sulfate ester modifies the hydroxy group(s) of the cellulose, thereby allowing an improvement in moldability, in particular, bending resistance when the obtained lignocellulose-derived materials, in particular, the complex consisting of the cellulose nanofiber having the sulfate ester group and the lignin-derived substance in which the cellulose nanofiber having the sulfate ester group and the lignin-derived substance are cross-linked, or the composition comprising the complex is molded. Furthermore, the protection reaction of the β-O-4 bond of the lignin-derived substance also efficiently progresses, and therefore, the yield of the lignin monomer is also improved.

In Step (A), (b), (c), and (a) are added in (d) at usually 25°C to 50°C, and subsequently are mixed for usually 30 minutes to 120 minutes while being heated to usually 50°C or more, preferably 60°C or more, and usually 120°C or less, preferably 100°C or less to cause a reaction, and subsequently, are cooled down to 50°C or less, preferably 40°C or less, and usually 20°C or more, and are added with (e) to cause a reaction, preferably are added with (e) to further mix, preferably mix for usually 30 minutes to 120 minutes to cause a reaction.

In Step (A), adding (b), (c), and (a) in (d), thereafter, mixing while heating them to a constant temperature to cause a reaction, subsequently cooling them to a constant temperature, adding (e), and thereafter, causing a reaction effectively sulfate ester modifies the hydroxy group(s) of the cellulose, thereby allowing an improvement in moldability, in particular, bending resistance when the obtained lignocellulose-derived materials, in particular, the complex consisting of the cellulose nanofiber having the sulfate ester group and the lignin-derived substance in which the cellulose nanofiber having the sulfate ester group and the lignin-derived substance are cross-linked, or the composition comprising the

complex is molded. Furthermore, the protection reaction of the β-O-4 bond of the lignin-derived substance also efficiently progresses, and therefore, the yield of the lignin monomer is also improved.

The determination of the completion of Step (A), that is, the determination of proceeding from Step (A) to Step (B) can be made with a reaction time or the like, but, for example, may be made with a value of absorbance of the solution part in the reactant. For example, Step (A) can be completed, that is, the mixing and/or reaction can be stopped based on the absorbance at a wavelength of 500 nm of the solution obtained by diluting the solution part in the reactant of (d), (b), (c), (a), and (e) 20 times. Specifically, during Step (A), a part of the solution in the reactant of (d), (b), (c), (a), and (e) is sampled and the absorbance at the wavelength of 500 nm of the solution diluted 20 times is measured. When the absorbance becomes usually 0.4 or more, preferably 0.5 or more, more preferably 0.7 or more, the mixing and/or reaction is stopped and the procedure can be proceeded to Step (B).

In Step (A), determining the stop timing of the mixing and reaction with the absorbance of the solution obtained by diluting the solution part in the reactant 20 times allows improvement in generation efficiency of monolignol, which is high in utility value.

In Step (A), the DMSO and the acetic anhydride or the propionic anhydride converts the OH group of the lignin-derived substance into an aldehyde group by the Albright-Goldman oxidation reaction shown in (Reaction Equation 1). In view of this, even though the compound of (c) added at the start of the reaction, in particular, the aldehyde is consumed, the aldehyde generated by Reaction Equation 1 is supplemented, and thus, the chemical equilibrium of the protection reaction of the OH group of the lignin-derived substance maintains the direction of proceeding an acetal reaction. The aldehyde group (CHO group) of the lignin-derived substance generated by Reaction Equation 1 yields an acetal reaction with the OH group of the adjacent lignin-derived substance. As the result, with the present invention, both the swelling of the lignocellulose and the direction to proceed the acetal reaction of the chemical equilibrium which are necessary for the improved production yield of the monolignol can be achieved.

[Chem. 7]

(Reaction Equation 1)

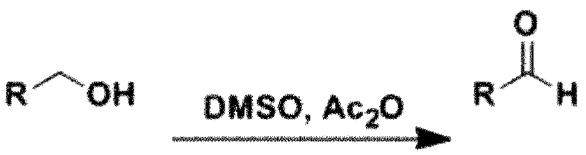


(In the formula, R is a lignin residue.)

Accordingly, in Step (A) of the present invention, mixing the raw materials of (a) to (e) allows protecting the OH group of the lignin-derived substance, sulfate ester modifying the cellulose nanofiber, and cross-linking the cellulose nanofiber having the sulfate ester group and the lignin-derived substance.

Subsequently, in Step (B), the reactant obtained in Step (A) is neutralized by the base.

Examples of the base are not limited, but include, for example, sodium hydroxide, potassium hydroxide, magnesium hydroxide, calcium hydroxide, ammonia, and the like.

The neutralization is performed until the pH of the solution part of the reactant reaches usually 5.0 to 8.0, preferably 6.5 to 7.5.

Executing the neutralization in Step (B) allows significantly suppressing changes in physical property when the composition comprising the cellulose nanofiber having the sulfate ester group and the lignin-derived substance or the complex thereof is stored for a long period of time.

Furthermore, in Step (C), the neutralized substance obtained in Step (B) is separated into the first solid component and the first liquid component. Here, the first solid component comprises the complex consisting of the cellulose having the sulfate ester group and the lignin-derived substance in which the cellulose having the sulfate ester group and the lignin-derived substance are cross-linked, and the first liquid component comprises an uncross-linked lignin-derived substance, a hemicellulose component, and the dimethylsulfoxide solvent.

Examples of the method for separating the neutralized substance into the first solid component and the first liquid component are not limited, but include known separation techniques in the technical field, for example, filtration, filtration under pressure, filtration under reduced pressure, centrifugation, screw filtration, and compression filtration. The solid-liquid separation in Step (C) can be adjusted at any liquid content. In view of this, the complex consisting of the cellulose having the sulfate ester group and the lignin-derived substance in which the cellulose having the sulfate ester group and the lignin-derived substance are cross-linked obtained in Step (C) may comprise the uncross-linked lignin-derived substance.

The adjustment of the liquid content of the solid-liquid separation allows controlling the stoichiometric mixture ratio of the cellulose having the sulfate ester group to the lignin-derived substance and allows an improvement in moldability, in particular, the breaking strength and/or the bending resistance when the obtained lignocellulose-derived materials, in particular, the complex consisting of the cellulose nanofiber having the sulfate ester group and the lignin-derived substance in which the cellulose nanofiber having the sulfate ester group and the lignin-derived substance are cross-linked or the composition comprising the complex is molded.

In Step (C), separating the complex consisting of the cellulose having the sulfate ester group and the lignin-derived substance in which the cellulose having the sulfate ester group and the lignin-derived substance are cross-linked, which is the first solid component, and the uncross-linked lignin-derived substance, the hemicellulose component, and the dimethylsulfoxide solvent, which are the first liquid component, allows parallelly and respectively obtaining the complex consisting of the cellulose nanofiber having the sulfate ester group and the lignin-derived substance in which the cellulose nanofiber having the sulfate ester group and the lignin-derived substance are cross-linked, the sulfate-esterified cellulose nanocrystal, the cellulose, and the monolignol in Step (D), Step (D'), Step (D"), and Step (D‴), which will be described in detail below.

As one embodiment of the present invention, the method for producing the lignocellulose-derived materials of the present invention may further include:

(D) a step of mixing the complex consisting of the cellulose having the sulfate ester group and the lignin-derived substance in which the cellulose having the sulfate ester group and the lignin-derived substance are cross-linked, comprised in the first solid component obtained in Step (C), and water or an organic solvent or a mixture liquid thereof while shear force is applied, generating electrostatic repulsion between the sulfate ester groups having a negative electric charge in the cellulose having the sulfate ester group to defibrate a fiber width to a nano size, thereby obtaining the complex comprising the cellulose nanofiber having the sulfate ester group and the lignin-derived substance, in particular, the complex consisting of the cellulose nanofiber having the sulfate ester group and the lignin-derived substance in which the cellulose nanofiber having the sulfate ester group and the lignin-derived substance are cross-linked.

The mixing conditions are not limited, but the complex consisting of the cellulose having the sulfate ester group and the lignin-derived substance in which the cellulose having the sulfate ester group and the lignin-derived substance are cross-linked and the water or the organic solvent or the mixture liquid thereof are mixed at usually 5°C to 40°C for usually 0.1 hours to 2 hours.

In Step (D), for example, the complex consisting of the cellulose having the sulfate ester group and the lignin-derived substance in which the cellulose having the sulfate ester group and the lignin-derived substance are cross-linked, obtained in Step (C), is added in a container in which water as a solvent is added such that the complex is usually 0.1 weight% to 10 weight% based on the total weight of the mixture liquid, and the mixture liquid is mixed by using a device that can apply shear force to the complex consisting of the cellulose having the sulfate ester group and the lignin-derived substance in which the cellulose having the sulfate ester group and the lignin-derived substance are cross-linked, for example, a stirrer, a triple roll mill, a biaxial kneader, a three-axis planetary kneader, a disperser, a paint shaker, a bead mill, a cutter mixer, and a planetary mixer, and thus, a dispersion liquid of the complex consisting of the cellulose nanofiber having the sulfate ester group and the lignin-derived substance in which the cellulose nanofiber having the sulfate ester group and the lignin-derived substance are cross-linked as the lignocellulose-derived material can be obtained. Drying the dispersion liquid as necessary in a known method, such as freeze-dry and spray-dry allows obtaining the solid component of the complex consisting of the cellulose nanofiber having the sulfate ester group and the lignin-derived substance in which the cellulose nanofiber having the sulfate ester group and the lignin-derived substance are cross-linked.

Fig. 7 illustrates an exemplary method (A) to (D) for producing the lignocellulose-derived material according to the above-described embodiment of the present invention. In Fig. 7, (A) dried lignocellulosic biomass (a) and the above-described materials (b) to (e) are mixed preferably in the order of (d), (b), (c), (a), and (e) to simultaneously execute the protection of the OH group of the lignin-derived substance and the sulfuric acid esterification of the cellulose in the biomass, thereafter, (B) a neutralization step and (C) a separation step are undergone, and (D) mixing and defibrating steps are performed while shear force is applied, thereby preparing a dispersion liquid of the complex of the sulfate-esterified cellulose nanofiber and the lignin-derived substance as the lignocellulose-derived material. Drying the dispersion liquid as necessary in a known method, such as freeze-dry and spray-dry allows obtaining the solid component of the complex consisting of the cellulose nanofiber having the sulfate ester group and the lignin-derived substance in which the cellulose nanofiber having the sulfate ester group and the lignin-derived substance are cross-linked.

As one embodiment of the present invention, the method for producing the lignocellulose-derived materials of the present invention may further include,

(D') a step of mixing the complex consisting of the cellulose having the sulfate ester group and the lignin-derived substance in which the cellulose having the sulfate ester group and the lignin-derived substance are cross-linked, comprised in the first solid component obtained in Step (C), and water or an organic solvent or a mixture liquid thereof and sulfuric acid, and heating the mixture to obtain a sulfate-esterified cellulose nanocrystal.

In Step (D’), for example, the complex consisting of the cellulose having the sulfate ester group and the lignin-derived substance in which the cellulose having the sulfate ester group and the lignin-derived substance are cross-linked, comprised in the first solid component obtained in Step (C), (usually 2 weight% to 20 weight% based on the total weight of the mixture liquid), the water (usually 20 weight% to 50 weight% based on the total weight of the mixture liquid), and the sulfuric acid (usually 40 weight% to 70 weight% based on the total weight of the mixture liquid) are mixed to prepare a mixture liquid, and the mixture liquid is stirred for usually 20 minutes to 3 hours while the mixture liquid is heated to usually 40°C to 90°C, thereby allowing the obtainment of the sulfate-esterified cellulose nanocrystal as the lignocellulose-derived material.

Executing Step (D’), after Step (A) and subsequently Step (C) allows shortening the acid hydrolysis reaction period in Step (D’).

As one embodiment of the present invention, the method for producing the lignocellulose-derived materials of the present invention may further include

(D") a step of mixing the first solid component obtained in Step (C), in particular, the first solid component comprising the uncross-linked lignin-derived substance and a THF solvent to obtain a suspension and separating the obtained suspension into a second solid component comprising a cellulose and a second liquid component, and a step of depolymerizing the uncross-linked lignin-derived substance in the separated second liquid component to obtain monolignol.

Examples of the method for separating the suspension into the second solid component and the second liquid component are not limited, but include known separation techniques in the technical field, for example, filtration, filtration under pressure, filtration under reduced pressure, centrifugation, screw filtration, and compression filtration.

In Step (D"), the monolignol can be obtained by obtaining the cellulose as the second solid component together with the uncross-linked lignin-derived substance as the second liquid component from the suspension obtained by mixing the first solid component and the THF solvent and using a depolymerization process known in the technical field on the uncross-linked lignin-derived substance, accordingly, the cellulose and the monolignol can be parallelly obtained.

As one embodiment of the present invention, the method for producing the lignocellulose-derived materials of the present invention may further include

(D‴) a step of adding an ether-type solvent, such as diethyl ether, to the first liquid component consisting of the lignin-derived substance, the hemicellulose, and the dimethylsulfoxide obtained in Step (C) to precipitate the lignin-derived substance, removing the hemicellulose component and the dimethylsulfoxide as a liquid part by a separation technique, such as filtration, and depolymerizing the isolated lignin-derived substance to obtain monolignol.

In Step (D‴), by using a depolymerization process known in the technical field, that is, adding the ether-type solvent, such as diethyl ether, to the first liquid component obtained in in Step (C) to precipitate the lignin-derived substance, removing the hemicellulose component and the dimethylsulfoxide as the liquid part by a separation technique, such as filtration, and depolymerizing the isolated lignin-derived substance, the monolignol can be obtained.

In Step (D") and Step (D‴), for example, the lignin-derived substance obtained in Step (C) and by the isolation process (usually 0.5 weight% to 20 weight% based on the total weight of the mixture liquid), tetrahydrofuran (usually 80 weight% to 99 weight% based on the total weight of the mixture liquid), a hydrogen gas (inlet pressure of 0.8 MPa to 5 MPa, sealed), a metal catalyst, such as ruthenium carbon, palladium carbon, and platinum carbon, are mixed to prepare a mixture liquid, and the mixture liquid is stirred for usually one hour to six hours while being heated to usually 100°C to 250°C, thereby allowing the obtainment of the monolignol as the lignocellulose-derived material.

With the above-described producing method of the present invention, the lignocellulose-derived materials, in particular, the complex consisting of the cellulose nanofiber having the sulfate ester group and the lignin-derived substance in which the cellulose nanofiber having the sulfate ester group and the lignin-derived substance are cross-linked, the composition comprising the complex, the sulfate-esterified cellulose nanocrystal, the cellulose, and the monolignol can be parallelly and efficiently produced.

Figs 8 and 9 illustrates an exemplary method (A) to (D‴) for producing a cross-linked complex according to the embodiment of the present invention. In Fig. 8, (A) dried lignocellulosic biomass (a) and the above-described materials (b) to (e) are mixed preferably in the order of (d), (b), (c), (a), and (e) to simultaneously execute the protection of the OH group of the lignin-derived substance and the sulfuric acid esterification of the cellulose in the biomass, thereafter, (B) a neutralization step and (C) a separation step are undergone, and for a first solid component, (D) mixing and defibrating are performed while shear force is applied to prepare a complex of the sulfate-esterified cellulose nanofiber and the lignin-derived substance from the complex of the sulfate-esterified cellulose and the lignin-derived substance, (D’) the sulfate-esterified cellulose is acid-hydrolyzed to prepare a sulfate-esterified cellulose nanocrystal, and for a first liquid component, (D‴) the lignin-derived substance is depolymerized to prepare monolignol, thereby parallelly producing each of the lignocellulose-derived materials.

In Fig. 9, (A) dried lignocellulosic biomass (a) and the above-described materials (b) to (e) are mixed preferably in the order of (d), (b), (c), (a), and (e) to simultaneously execute the protection of the OH group of the lignin-derived substance and the sulfuric acid esterification of the cellulose in the biomass, thereafter, (B) a neutralization step and (C) a filtration (hemicellulose separation process) step are undergone to separate into a first solid component (comprising

an uncross-linked lignin-derived substance) and hemicellulose as a first liquid component, and for the first solid component (comprising the uncross-linked lignin-derived substance), (D) mixing and defibrating are performed while shear force is applied to prepare a complex of the sulfate-esterified cellulose nanofiber and the lignin-derived substance from the complex of the sulfate-esterified cellulose and the lignin-derived substance, (D') the sulfate-esterified cellulose is acid-hydrolyzed to prepare a sulfate-esterified cellulose nanocrystal, and (D") THF is added and filtration and washing are performed to obtain cellulose as a second solid component and a lignin-derived substance as a second liquid component, the lignin-derived substance is depolymerized to prepare monolignol, thereby parallelly producing each of the lignocellulose-derived materials.

The present invention also relates to a system for producing lignocellulose-derived materials based on the producing method of the present invention and a control system for controlling the system.

Fig. 10 illustrates an exemplary system of the present invention and Fig. 11 illustrates a control system for a system of the present invention.

With reference to Fig. 10, a system of the present invention includes:

(a system for Step (A))

a dryer for obtaining a lignocellulose dried body by drying lignocellulosic biomass as a raw material;
a conveyor that couples the dryer to a reaction chamber, the conveyor being for conveying the lignocellulose dried body from the dryer to the reaction chamber;
the reaction chamber in which, in the lignocellulose dried body conveyed by the conveyor, an OH group(s) of a lignin-derived substance comprised in lignocellulose is protected, cellulose is sulfate-esterified, and the sulfate-esterified cellulose and the lignin-derived substance are cross-linked to obtain a cross-linked complex, the reaction chamber being for obtaining a reactant comprising the cross-linked complex;

(a system for Step (B) to Step (C))

a conveyor that couples the reaction chamber to a neutralization, filtration, washing tank, the conveyor being for conveying the reactant from the reaction chamber to the neutralization, filtration, washing tank;
the neutralization, filtration, washing tank that neutralizes, filters, and washes the reactant conveyed by the conveyor, the neutralization, filtration, washing tank being for obtaining a solid body (a complex consisting of a cellulose having a sulfate ester group and a lignin-derived substance in which the cellulose having the sulfate ester group and the lignin-derived substance are cross-linked) and a liquid;

(a system for Step (D))

a conveyor that couples the neutralization, filtration, washing tank to a defibration tank, the conveyor being for conveying the solid body from the neutralization, filtration, washing tank to the defibration tank;
the defibration tank that defibrates the solid body conveyed by the conveyor, the defibration tank being for obtaining a complex consisting of a cellulose nanofiber having the sulfate ester group and the lignin-derived substance in which the cellulose nanofiber having the sulfate ester group and the lignin-derived substance are cross-linked;
a conveyor that couples the defibration tank to a storage tank, the conveyor being for conveying the complex from the defibration tank to the storage tank;
the storage tank for storing the complex conveyed by the conveyor; (a system for Step (D'))
a conveyor that couples the neutralization, filtration, washing tank to a hydrolysis tank, the conveyor being for conveying the solid body from the neutralization, filtration, washing tank to the hydrolysis tank;
the hydrolysis tank that hydrolyzes the solid body conveyed by the conveyor, the hydrolysis tank being for obtaining a dispersion liquid comprising a sulfate-esterified cellulose nanocrystal;
a conveyor that couples the hydrolysis tank to a filtration, washing tank, the conveyor being for conveying the dispersion liquid comprising the sulfate-esterified cellulose nanocrystal from the hydrolysis tank to the filtration, washing tank;
the filtration, washing tank that filters and washes the dispersion liquid comprising the sulfate-esterified cellulose nanocrystal conveyed by the conveyor, the filtration, washing tank being for obtaining the sulfate-esterified cellulose nanocrystal;
a conveyor that couples the filtration, washing tank to a disperser, the conveyor being for conveying the sulfate-esterified cellulose nanocrystal from the filtration, washing tank to the disperser;
the disperser that disperses the sulfate-esterified cellulose nanocrystal conveyed by the conveyor, the disperser being for obtaining a dispersed sulfate-esterified cellulose nanocrystal;

a conveyor that couples the disperser to a storage tank, the conveyor being for conveying the dispersed sulfate-esterified cellulose nanocrystal from the disperser to the storage tank;
the storage tank for storing the dispersed sulfate-esterified cellulose nanocrystal conveyed by the conveyor;
a conveyor that couples the filtration, washing tank to an activated sludge tank, the conveyor being for conveying an activated sludge from the filtration, washing tank to the activated sludge tank;
the activated sludge tank for processing and storing a hydrocarbon conveyed by the conveyor;

(a system for Step (D"))

a conveyor that couples the neutralization, filtration, washing tank to a distillation column, the conveyor being for conveying a liquid from the neutralization, filtration, washing tank to the distillation column;
the distillation column that separates the liquid conveyed by the conveyor into a volatile component and a non-volatile component;
a solvent collection tank or an unnecessary component collection tank coupled to the distillation column, the solvent collection tank or the unnecessary component collection tank being for collecting the volatile component;
a resedimentation chamber for collecting the non-volatile component coupled to the distillation column, the resedimentation chamber being for adding diethyl ether to the non-volatile component to obtain a suspension comprising a solid body containing a lignin component and a liquid in which the hemicellulose component is dissolved;
a conveyor that couples the resedimentation chamber to a filter, the conveyor being for conveying the suspension from the resedimentation chamber to the filter;
the filter for obtaining the solid body and the liquid from the suspension conveyed by the conveyor;
a conveyor that couples the filter to a pressured reaction chamber, the conveyor being for conveying the solid body from the filter to the pressured reaction chamber;
the pressured reaction chamber that depolymerizes the solid body conveyed by the conveyor, the pressured reaction chamber being for obtaining a liquid comprising crude monolignol;
a conveyor that couples the pressured reaction chamber to a distillation column, the conveyor being for conveying the liquid comprising the monolignol from the pressured reaction chamber to the distillation column;
the distillation column that separates and purifies the liquid comprising the monolignol conveyed by the conveyor into each single component, the distillation column being for obtaining the monolignol;
a conveyor that couples the distillation column to a storage tank, the conveyor being for conveying the monolignol from the distillation column to the storage tank;
the storage tank for storing the monolignol conveyed by the conveyor;
a conveyor that couples the filter to an evaporator, the conveyor being for conveying the liquid from the filter to the evaporator;
the evaporator that distills the liquid conveyed by the conveyor, the evaporator being for obtaining hemicellulose and hydrocarbon activated sludge as a waste liquid;
a conveyor that couples the evaporator to a storage tank, the conveyor being for conveying the hemicellulose from the evaporator to the storage tank;
the storage tank for storing the hemicellulose conveyed by the conveyor;
a conveyor that couples the evaporator to the activated sludge tank, the conveyor being for conveying the hydrocarbon as the waste liquid from the evaporator to the activated sludge tank.

With reference to Fig. 11, the system of the present invention can easily execute the producing method of the present invention using the system of the present invention manually or automatically with a control system of the present invention.

[Examples]

While the following describes the present invention in more detail using Examples, the technical scope of the present invention is not limited by them.

1. Preparation of Samples

Sample A: Preparation of Sulfate-esterified Cellulose Nanofiber

3000 g of dimethylsulfoxide, 333 g of acetic anhydride, and 43 g of sulfuric acid 98% were added in a 5L flask and were stirred with a stirrer tip. Subsequently, 100 g of pulp (NBKP, CARIBOO) was added and stirred at room

temperature for four hours to execute a sulfuric acid esterification treatment. Then, a sodium hydroxide aqueous solution 5% was dropped to neutralize the pH of the reaction system to 7.0. Subsequently, the flask content was filtered with a nylon mesh (PA-11μ, manufactured by AS ONE CORPORATION) and was simultaneously rinsed with distilled water. The obtained sulfate-esterified pulp was moved in a 10L flask, distilled water was added to the flask so as to obtain a solid content concentration of 0.5%, and an ultrasonic treatment was performed, and thus, a sulfate-esterified cellulose nanofiber aqueous dispersion with the solid content concentration of 0.5% was obtained. Subsequently, the sulfate-esterified cellulose nanofiber aqueous dispersion was frozen with liquid nitrogen and dried with a freezing drying machine (FDU-12AS, manufactured by AS ONE CORPORATION), and thus, a sulfate-esterified cellulose nanofiber dried body with an average fiber diameter of 10 nm (Sample A) was obtained.

Sample B: Preparation 2 of Sulfate-esterified Cellulose Nanofiber

Other than the additive amount of the sulfuric acid 98% was changed to 66 g in the preparation method of Sample A, a preparation method similar to that of Sample A was performed, and thus, a sulfate-esterified cellulose nanofiber dried body with an average fiber diameter of 4 nm (Sample B) was obtained.

Sample C: Preparation 3 of Sulfate-esterified Cellulose Nanofiber

Other than the additive amount of the sulfuric acid 98% was changed to 33 g in the preparation method of Sample A, a preparation method similar to that of Sample A was performed, and thus, a sulfate-esterified cellulose nanofiber dried body with an average fiber diameter of 50 nm (Sample C) was obtained.

Sample D: Preparation 4 of Sulfate-esterified Cellulose Nanofiber

Other than the stirring in the sulfuric acid esterification treatment was changed to one hour at room temperature in the preparation method of Sample C, a preparation method similar to that of Sample C was performed, and thus, a sulfate-esterified cellulose nanofiber dried body with an average fiber diameter of 600 nm (Sample D) was obtained.

Sample E: Preparation 5 of Sulfate-esterified Cellulose Nanofiber

Other than the stirring in the sulfuric acid esterification treatment was changed to 0.5 hours at room temperature in the preparation method of Sample C, a preparation method similar to that of Sample C was performed, and thus, a sulfate-esterified cellulose nanofiber dried body with an average fiber diameter of 650 nm (Sample E) was obtained.

Sample F: Preparation of TEMPO Oxidized Cellulose Nanofiber

100 g of pulp (NBKP, CARIBOO) (absolute dry) was added to 5L of aqueous solution in which 25 mmol of 2,2,6,6-tetramethylpiperidine-N-oxide (TEMPO) and 200 mmol of sodium bromide were dissolved, and they were stirred until the pulp was uniformly dispersed. After the temperature was set to 20°C, 640 mmol of a sodium hypochlorite aqueous solution (manufactured by FUJIFILM Wako Pure Chemical Corporation) was added to the reaction system to start the oxidation reaction. 20°C was constantly maintained during the reaction. Even though the pH in the system decreased during the reaction, a 3N sodium hydroxide aqueous solution was successively added so as to adjust to pH 10. After the three hours of reaction, the mixture was filtered with a glass filter and sufficiently washed with water, and thus, oxidized pulp was obtained. The slurry of the oxidized pulp obtained above with a concentration of 1% (w/v) was processed three times with a high-pressure homogenizer (140 MPa), and thus, an aqueous dispersion of the TEMPO oxidized cellulose nanofiber in a transparent gel state was obtained. Subsequently, the aqueous dispersion of the TEMPO oxidized cellulose nanofiber was frozen with liquid nitrogen and dried with a freezing drying machine (FDU-12AS, manufactured by AS ONE CORPORATION), and thus, a TEMPO oxidized cellulose nanofiber dried body with an average fiber diameter of 10 nm (Sample F) was obtained.

Sample G: Preparation of Phosphate-esterified Cellulose Nanofiber

100 g of urea, 55.3 g of sodium dihydrogenphosphate dihydrate, and 41.3 g of sodium hydrogen phosphate were dissolved in 109 g of water to prepare a phosphorylation reagent. A sheet obtained by paper making from dried pulp (NBKP, CARIBOO) was processed with a cutter mill and a pin mill to make flocculent fibers. 100 g in absolute dry mass of the flocculent fibers were taken and evenly sprayed with the phosphorylation reagent, then, the fibers were kneaded by hands, and thus, chemical impregnated pulp was obtained. The obtained chemical impregnated pulp was heated for 80 minutes in an air dryer with a damper heated to 140°C, and thus, phosphorylated pulp was obtained. 100g

in pulp mass of the obtained phosphorylated pulp was preparatively isolated, was poured with 10 L of ion exchanged water, was stirred and uniformly dispersed, and thereafter, was filtered and dehydrated, and thus, a dehydrated sheet was obtained. The above-described step was repeated twice. Next, the obtained dehydrated sheet was diluted with 10 L of ion exchanged water, was added with 1 N of a sodium hydroxide aqueous solution little by little while being stirred, and thus, pulp slurry with pH 12 to 13 was obtained. Then, this pulp slurry was dehydrated to obtain a dehydrated sheet, thereafter, the dehydrated sheet was poured with 10 L of ion exchanged water and stirred and uniformly dispersed, and thereafter, was filtered and dehydrated, and thus, a dehydrated sheet was obtained. The above-described step was repeated twice. The cellulose fibers obtained after the dehydration washing was added with ion exchanged water, and thus, a slurry of 0.5 mass% was prepared. This slurry was defibrated for 180 minutes under the condition of 6900 rotations/minute using a defibration device (CLEARMIX-11S, manufactured by M Technique Co., Ltd.). Then, ion exchanged water was added to adjust to a solid content concentration of 0.25 mass% and continuous centrifugation was performed using a cooling high-speed centrifugal separator (H-2000B, RN rotor, CKN1 collector, manufactured by KOKUSAN Co. Ltd.). At this time, a defibration liquid was sent at 100 ml/minute with a liquid sending pump, and the centrifugation was performed under a condition of 18000 G. The obtained supernatant liquid was collected, and thus, an aqueous dispersion of the phosphate-esterified cellulose nanofiber was obtained. Subsequently, the aqueous dispersion of the phosphate-esterified cellulose nanofiber was frozen with liquid nitrogen and dried with a freezing drying machine (FDU-12AS, manufactured by AS ONE CORPORATION), and thus, a phosphate-esterified cellulose nanofiber dried body with an average fiber diameter of 10 nm (Sample G) was obtained.

Sample H: Preparation of Unmodified Cellulose Nanofiber

A cellulose nanofiber aqueous dispersion (BiNFi-s, manufactured by SUGINO MACHINE LIMITED CO., LTD.) was frozen with liquid nitrogen and dried with a freezing drying machine (FDU-12AS, manufactured by AS ONE CORPORATION), and thus, an unmodified cellulose nanofiber dried body (Sample H) was obtained.

Sample I: Preparation of Cellulose Nanofiber Having Both Sulfate Ester Group and Carboxy Group

Other than "100 g of pulp (NBKP, CARIBOO) (absolute dry)" was changed to "100 g of the sulfate-esterified cellulose nanofiber dried body of Sample A" in the preparation method of Sample F, a preparation method similar to that of Sample F was performed, and thus, a cellulose nanofiber dried body having both the sulfate ester group and the carboxy group with an average fiber diameter of 10 nm (Sample I) was obtained.

Sample J: Preparation of Cellulose Nanofiber Having Both Sulfate Ester Group and Phosphoester Group

Other than "[A] sheet obtained by paper making from dried pulp (NBKP, CARIBOO) was processed with a cutter mill and a pin mill to make flocculent fibers. 100 g in absolute dry mass of the flocculent fibers" was changed to "100 g of the sulfate-esterified cellulose nanofiber dried body of Sample A" in the preparation method of Sample G, a preparation method similar to that of Sample G was performed, and thus, a cellulose nanofiber dried body having both the sulfate ester group and the phosphoester group with an average fiber diameter of 10 nm (Sample J) was obtained.

Sample K: Preparation of Cellulose Nanofiber Having Both Sulfate Ester Group and Acetyl Group

100 g of the sulfate-esterified cellulose nanofiber dried body of Sample A was immersed in a Petri dish with a reaction solution of acetic anhydride:acetic acid = 9:1 (volume ratio), and was left for 30 minutes under reduced pressure of 1 kPa in a desiccator at room temperature, and thus, the sulfate-esterified cellulose nanofiber dried body was impregnated with the reaction solution. The pressure was brought back to a normal pressure, and the sulfate-esterified cellulose nanofiber dried body was allowed to stand for five days under a $N_2$ atmosphere in a dark place at room temperature to execute an acetylation treatment. Subsequently, the solid component was washed with methanol, running water, and distilled water, and thereafter, was dried under reduced pressure for one hour at 60°C, and thus, a cellulose nanofiber dried body having both a sulfate ester group and an acetyl group with an average fiber diameter of 10 nm (Sample K) was obtained.

Example 1

50 g of Sample A and 50 g of kraft lignin (manufactured by Sigma Aldrich, Indulin AT) were mixed in a beaker using a spatula, and thus, a mixture was obtained. Subsequently, the mixture was, while being heated to 100°C, passed four times through a triple roll mill (triple roll mill Type 1983, manufactured by Imoto machinery Co., LTD), and thus, a formed body consisting of a sulfate-esterified cellulose nanofiber and lignin-derived substance complex (hydrogen-bonded complex) in a sheet shape with thickness of 20 μm was produced. Subsequently, two obtained sheet-shaped formed bodies were stacked over both surfaces of one paper base material (qualitative filter paper No. 2, cp110 mm, thickness of 0.26 mm, manufactured by Advantec Co., LTD.) so as to sandwich the paper base material, and were heated and pressurized for two minutes with a press molding machine (4ton both tightening hydraulic press molding machine, manufactured by IWAKI INDUSTRY Co., Ltd) heated to 100°C, and thus, a sheet-shaped laminated body was made. Subsequently, the sheet-shaped laminated body was cut out with a sample cutting machine (SDL200, manufactured by DUMBBELL CO., LTD.) so as to obtain a test portion with a thickness of 0.26 mm, a width of 10 mm, and a length of 100 mm, and thus, a dumbbell sample comprising a formed body consisting of a sulfate-esterified cellulose nanofiber and lignin-derived substance complex (hydrogen-bonded complex) with a cellulose nanofiber solid content proportion of 50% (Example 1) was produced.

Example 2

730 g of dimethylsulfoxide, 10.5 g of sulfuric acid 98%, 28.2 g of a formaldehyde 37% aqueous solution, and 81.1 g of acetic anhydride were added in a 2000 mL flask, and were stirred with a stirrer tip. Subsequently, 150 g of conifer wood chips derived from pines was added as lignocellulose in the above-described flask and was stirred for four hours at 95°C, and thus, the OH group in the cellulose component was sulfate-esterified and the OH group of the cellulose component and the OH group of the lignin component were cross-linked with a formaldehyde molecule by an acetal reaction. At this time, the absorbance at the wavelength of 500 nm of the solution diluted the reaction solution 20 times was confirmed to be 0.4. Subsequently, a sodium hydroxide 40% aqueous solution was dropped to obtain pH 7, and the reaction was stopped. Subsequently, 150 g of diethyl ether was added to precipitate the cellulose component and the lignin-derived substance component and dissolve the hemicellulose component. Subsequently, the precipitate was extracted by filtering with a nylon mesh (PA-11μ, manufactured by AS ONE CORPORATION). The precipitate was dried for 30 minutes at 105°C, and thus, a sulfate-esterified cellulose and lignin-derived substance complex (comprising cross-linked complex and uncross-linked material) with a cellulose solid content proportion of 50% was obtained. Subsequently, 80 g of the obtained sulfate-esterified cellulose and lignin-derived substance complex was treated by the triple roll mill similarly to Example 1, and thus, a sheet-shaped formed body with a thickness of 20 μm was obtained in which the sulfate-esterified cellulose was nano-defibrated. Subsequently, two obtained sheet-shaped formed bodies were stacked over both surfaces of one paper base material (qualitative filter paper No. 2, φ110 mm, thickness of 0.26 mm, manufactured by Advantec Co., LTD.) so as to sandwich the paper base material, and were heated and pressurized for two minutes with a press molding machine (4ton both tightening hydraulic press molding machine, manufactured by IWAKI INDUSTRY Co., Ltd) heated to 100°C, and thus, a sheet-shaped laminated body was made. Subsequently, the sheet-shaped laminated body was cut out into a dumbbell form similarly to Example 1, and thus, a dumbbell sample comprising the formed body consisting of the sulfate-esterified cellulose nanofiber and lignin-derived substance complex (the cross-linked complex) with a cellulose nanofiber solid content proportion of 50% (Example 2) was produced. On the other hand, 2 g of the sulfate-esterified cellulose and lignin-derived substance complex was added in a pressure resistant reactor (Series 4560, manufactured by Parr Instrument Company), 1 g of ruthenium 5 weight% carbon and 200 mL of THF were added, and a hydrogen gas was injected at an inlet pressure of 4 MPa. Subsequently, the pressure resistant reactor was heated for three hours at 200°C and the temperature was decreased to a room temperature. Subsequently, a lignin-derived oligomer and ruthenium carbon as solid components were removed with a nylon mesh (PA-11μ, manufactured by AS ONE CORPORATION), and thus, a soluble component was obtained. Subsequently, a solvent was distilled away from the soluble component using an evaporator to obtain monolignol.

Example 3

5 g of Sample A, 5 g of kraft lignin (manufactured by Sigma Aldrich, Indulin AT), and 90 g of low-density polyethylene pellets (manufactured by SANPLATEC CO., Ltd.) were mixed in a beaker using a spatula, and thus, a mixture was obtained. Subsequently, a triple roll mill treatment, a production of a laminated body with a paper base material, and a cut out treatment into a dumbbell form were performed on the mixture similarly to Example 1, and thus, a dumbbell sample comprising the formed body consisting of a sulfate-esterified cellulose nanofiber and lignin-derived substance complex (hydrogen-bonded complex) with a cellulose nanofiber solid content proportion of 5% and low-density polyethylene (Example 3) was produced.

Example 4

A mixture produced by mixing 10 g of the sulfate-esterified cellulose and lignin-derived substance complex with a cellulose solid content proportion of 50% obtained in the method in Example 2 and 90 g of low-density polyethylene pellets (manufactured by SANPLATEC CO., Ltd.) in a beaker using a spatula was treated by the triple roll mill similarly

to Example 1, and thus, a dumbbell sample comprising a formed body consisting of a sulfate-esterified cellulose nanofiber and lignin-derived substance complex (cross-linked complex) with a cellulose nanofiber solid content proportion of 5% and low-density polyethylene (Example 4) was produced.

Example 5

Other than the "low-density polyethylene pellets" were changed to "PHBH pellets (manufactured by KANEKA CORPORATION)" in Example 3, a method similar to that in Example 3 was performed to fabricate a dumbbell sample comprising a formed body consisting of a sulfate-esterified cellulose nanofiber and lignin-derived substance complex (hydrogen-bonded complex) with a cellulose nanofiber solid content proportion of 5% and PHBH (Example 5).

Example 6

Other than the "low-density polyethylene pellets" were changed to "PHBH pellets (manufactured by KANEKA CORPORATION)" in Example 4, a method similar to that in Example 4 was performed to fabricate a dumbbell sample comprising a formed body consisting of a sulfate-esterified cellulose nanofiber and lignin-derived substance complex (cross-linked complex) with a cellulose nanofiber solid content proportion of 5% and PHBH (Example 6).

Example 7

5 g of Sample A, 5 g of kraft lignin (Indulin AT, manufactured by Sigma Aldrich), and 180 g of natural rubber latex (manufactured by KENIS LIMITED) with a solid content concentration of 50 weight% were mixed at ordinary temperature using a planetary centrifugal mixer (manufactured by THINKY CORPORATION). Subsequently, the obtained mixture was put in a Teflon (registered trademark) tray and dried for three days at 80°C, thereafter, was added with 3 g of a radical generator (PERHEXA 25B-40, manufactured by NOF CORPORATION), and was, while being heated to 100°C, passed four times through a triple roll mill (triple roll mill Type 1983, manufactured by Imoto machinery Co., LTD), and thus, a formed body consisting of a sulfate-esterified cellulose nanofiber and lignin-derived substance complex and the natural rubber in a sheet shape with thickness of 20 μm was produced. Subsequently, a production of a laminated body with a paper base material and a cut out treatment into a dumbbell form were performed similarly to Example 1 on this formed body, and thus, a dumbbell sample comprising the formed body consisting of a sulfate-esterified cellulose nanofiber and lignin-derived substance complex (hydrogen-bonded complex) with a cellulose nanofiber solid content proportion of 5% and the natural rubber (Example 7) was produced.

Example 8

180 g of natural rubber latex (manufactured by KENIS LIMITED) with a solid content concentration of 50 weight% and 10 g of the sulfate-esterified cellulose nanofiber and lignin-derived substance complex with a cellulose nanofiber solid content proportion of 50% in Example 2 were mixed at ordinary temperature, and the obtained mixture was put in a Teflon (registered trademark) tray and dried for three days at 80°C. Subsequently, the dried body of the natural rubber latex and 3 g of a radical generator (PERHEXA 25B-40, manufactured by NOF CORPORATION) were added, and was, while being heated to 100°C, passed four times through a triple roll mill (triple roll mill Type 1983, manufactured by Imoto machinery Co., LTD), and thus, a formed body consisting of a sulfate-esterified cellulose nanofiber and lignin-derived substance complex and the natural rubber in a sheet shape with thickness of 20 μm was produced. Subsequently, a production of a laminated body with a paper base material and a cut out treatment into a dumbbell form were performed on this formed body similarly to Example 1, and thus, a dumbbell sample comprising the formed body consisting of a sulfate-esterified cellulose nanofiber and lignin-derived substance complex (hydrogen-bonded complex) with a cellulose nanofiber solid content proportion of 5% and the natural rubber (Example 8) was produced.

Example 9

Other than "50 g of Sample A and 50 g of kraft lignin (manufactured by Sigma Aldrich, Indulin AT) were mixed in a beaker using a spatula" was changed to "50 g of Sample A, 50 g of kraft lignin (manufactured by Sigma Aldrich, Indulin AT), and 1 g of silica (HS-208, manufactured by NIPPON STEEL Chemical & Material Co., Ltd.) were mixed in a beaker using a spatula" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 50% and silica (Example 9) was produced.

Example 10

Other than "the obtained sulfate-esterified cellulose nanofiber and lignin-derived substance complex was treated by the triple roll mill similarly to Example 1" was changed to "100 g of the obtained sulfate-esterified cellulose nanofiber and lignin-derived substance complex and 1 g of silica (HS-208, manufactured by NIPPON STEEL Chemical & Material Co., Ltd.) were treated by the triple roll mill similarly to Example 1" in Example 2, a method similar to that in Example 2 was performed, and thus, a dumbbell sample consisting of a sulfate-esterified cellulose nanofiber and lignin-derived substance complex (cross-linked complex) with a cellulose nanofiber solid content proportion of 50% and silica (Example 10) was produced.

Example 11

Other than "5 g of Sample A, 5 g of kraft lignin (manufactured by Sigma Aldrich, Indulin AT), and 90 g of low-density polyethylene pellets (manufactured by SANPLATEC CO., Ltd.) were mixed in a beaker using a spatula" was changed to "5 g of Sample A, 5 g of kraft lignin (manufactured by Sigma Aldrich, Indulin AT), 90 g of low-density polyethylene pellets (manufactured by SANPLATEC CO., Ltd.), and 1 g of silica (HS-208, manufactured by NIPPON STEEL Chemical & Material Co., Ltd.) were mixed in a beaker using a spatula" in Example 3, a method similar to that in Example 3 was performed, and thus, a dumbbell sample comprising a formed body consisting of a sulfate-esterified cellulose nanofiber and lignin-derived substance complex (hydrogen-bonded complex) with a cellulose nanofiber solid content proportion of 5%, the low-density polyethylene, and the silica (Example 11) was produced.

Example 12

Other than "[A] mixture produced by mixing 10 g of the sulfate-esterified cellulose nanofiber and lignin-derived substance complex with a cellulose nanofiber solid content proportion of 50% obtained in the method in Example 2 and 90 g of low-density polyethylene pellets (manufactured by SANPLATEC CO., Ltd.) in a beaker using a spatula was treated by the triple roll mill similarly to Example 1" was changed to "[A] mixture produced by mixing 10 g of the sulfate-esterified cellulose nanofiber and lignin-derived substance complex with a cellulose nanofiber solid content proportion of 50% obtained in the method in Example 2, 90 g of low-density polyethylene pellets (manufactured by SANPLATEC CO., Ltd.), and 1 g of silica (HS-208, manufactured by NIPPON STEEL Chemical & Material Co., Ltd.) in a beaker using a spatula was treated by the triple roll mill similarly to Example 1" in Example 4, a method similar to that in Example 4 was performed, and thus, a dumbbell sample comprising a formed body consisting of a sulfate-esterified cellulose nanofiber and lignin-derived substance complex (cross-linked complex) with a cellulose nanofiber solid content proportion of 5%, the low-density polyethylene, and the silica (Example 12) was produced.

Example 13

Other than "50 g of Sample A and 50 g of kraft lignin (manufactured by Sigma Aldrich, Indulin AT) were mixed in a beaker using a spatula" was changed to "0.03 g of Sample A and 99.97 g of kraft lignin (manufactured by Sigma Aldrich, Indulin AT) were mixed in a beaker using a spatula" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 0.03% (Example 13) was produced.

Example 14

Other than "50 g of Sample A and 50 g of kraft lignin (manufactured by Sigma Aldrich, Indulin AT) were mixed in a beaker using a spatula" was changed to "0.05 g of Sample A and 99.95 g of kraft lignin (manufactured by Sigma Aldrich, Indulin AT) were mixed in a beaker using a spatula" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 0.05% (Example 14) was produced.

Example 15

Other than "50 g of Sample A and 50 g of kraft lignin (manufactured by Sigma Aldrich, Indulin AT) were mixed in a beaker using a spatula" was changed to "5 g of Sample and 95 g of kraft lignin (manufactured by Sigma Aldrich, Indulin AT) were mixed in a beaker using a spatula" in Example 1, a method similar to that in Example 1 was performed,

and thus, a dumbbell sample comprising a formed body consisting of a sulfate-esterified cellulose nanofiber and lignin-derived substance complex (hydrogen-bonded complex) with a cellulose nanofiber solid content proportion of 5% (Example 15) was produced.

Example 16

Other than "50 g of Sample A and 50 g of kraft lignin (manufactured by Sigma Aldrich, Indulin AT) were mixed in a beaker using a spatula" was changed to "30 g of Sample A and 70 g of kraft lignin (manufactured by Sigma Aldrich, Indulin AT) were mixed in a beaker using a spatula" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 30% (Example 16) was produced.

Example 17

Other than "50 g of Sample A and 50 g of kraft lignin (manufactured by Sigma Aldrich, Indulin AT) were mixed in a beaker using a spatula" was changed to "80 g of Sample A and 20 g of kraft lignin (manufactured by Sigma Aldrich, Indulin AT) were mixed in a beaker using a spatula" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 80% (Example 17) was produced.

Example 18

Other than "50 g of Sample A and 50 g of kraft lignin (manufactured by Sigma Aldrich, Indulin AT) were mixed in a beaker using a spatula" was changed to "85 g of Sample A and 15 g of kraft lignin (manufactured by Sigma Aldrich, Indulin AT) were mixed in a beaker using a spatula" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 85% (Example 18) was produced.

Example 19

Other than "stirred for four hours at 95°C" was changed to "stirred for one hour at 95°C, then, a part (20.5 g) of the fiber component was removed, and stirred further for three hours at 95°C" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 5% (Example 19) was produced.

Example 20

Other than "Sample A" was changed to "Sample B" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 50% (Example 20) was produced.

Example 21

Other than "Sample A" was changed to "Sample C" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 50% (Example 21) was produced.

Example 22

Other than "Sample A" was changed to "Sample D" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion

of 50% (Example 22) was produced.

Example 23

Other than "Sample A" was changed to "Sample E" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 50% (Example 23) was produced.

Example 24

Other than "the mixture was, while being heated to 100°C, passed four times through a triple roll mill (triple roll mill Type 1983, manufactured by Imoto machinery Co., LTD)" was changed to "the mixture was kneaded with a biaxial kneader (ultracompact twin screw continuous kneader KRC junior, manufactured by Kurimoto, Ltd.), and thereafter, was pressed with a press molding machine (4ton both tightening hydraulic press molding machine, manufactured by IWAKI INDUSTRY Co., Ltd) heated to 100°C" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 50% (Example 24) was produced.

Example 25

Other than "the obtained sulfate-esterified cellulose nanofiber and lignin-derived substance complex was treated by the triple roll mill similarly to Example 1" was changed to "the obtained sulfate-esterified cellulose nanofiber and lignin-derived substance complex was treated by the biaxial kneader similarly to Example 24" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 25) was produced.

Example 26

Other than "a triple roll mill treatment, a production of a laminated body with a paper base material, and a cut out treatment into a dumbbell form were performed similarly to Example 1 on the mixture" was changed to "a biaxial kneader treatment, a production of a laminated body with a paper base material, and a cut out treatment into a dumbbell form were performed similarly to Example 24 on the mixture" in Example 3, a method similar to that in Example 3 was performed, and thus, a dumbbell sample comprising a formed body consisting of a sulfate-esterified cellulose nanofiber and lignin-derived substance complex (hydrogen-bonded complex) with a cellulose nanofiber solid content proportion of 5% and low-density polyethylene (Example 26) was produced.

Example 27

Other than "a mixture was treated by the triple roll mill similarly to Example 1" was changed to "a mixture was treated by a biaxial kneader similarly to Example 24" in Example 4, a method similar to that in Example 4 was performed, and thus, a dumbbell sample comprising a formed body consisting of a sulfate-esterified cellulose nanofiber and lignin-derived substance complex (cross-linked complex) with a cellulose nanofiber solid content proportion of 5% and low-density polyethylene (Example 27) was produced.

Example 28

Other than "the mixture was, while being heated to 100°C, passed four times through a triple roll mill (triple roll mill Type 1983, manufactured by Imoto machinery Co., LTD)" was changed to "the mixture was pressed with a press molding machine (4ton both tightening hydraulic press molding machine, manufactured by IWAKI INDUSTRY Co., Ltd) heated to 100°C" in Example 1, a method similar to that in Example 1 was performed, and thus, a dumbbell sample comprising a formed body consisting of a sulfate-esterified cellulose nanofiber and lignin-derived substance complex (hydrogen-bonded complex) with a cellulose nanofiber solid content proportion of 50% (Example 28) was produced.

Example 29

Other than "the obtained sulfate-esterified cellulose nanofiber and lignin-derived substance complex was treated by the triple roll mill similarly to Example 1" was changed to "the obtained sulfate-esterified cellulose nanofiber and lignin-derived substance complex was treated by the press molding machine similarly to Example 28" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 29) was produced.

Example 30

Other than "a triple roll mill treatment, a production of a laminated body with a paper base material, and a cut out treatment into a dumbbell form were performed similarly to Example 1 on the mixture" was changed to "a press molding machine treatment, a production of a laminated body with a paper base material, and a cut out treatment into a dumbbell form were performed similarly to Example 28 on the mixture" in Example 3, a method similar to that in Example 3 was performed, and thus, a dumbbell sample comprising a formed body consisting of a sulfate-esterified cellulose nanofiber and lignin-derived substance complex (hydrogen-bonded complex) with a cellulose nanofiber solid content proportion of 5% and low-density polyethylene (Example 30) was produced.

Example 31

Other than "a mixture was treated by the triple roll mill similarly to Example 1" was changed to "a mixture was treated by the press molding machine similarly to Example 28" in Example 4, a method similar to that in Example 4 was performed, and thus, a dumbbell sample comprising a formed body consisting of a sulfate-esterified cellulose nanofiber and lignin-derived substance complex (cross-linked complex) with a cellulose nanofiber solid content proportion of 5% and low-density polyethylene (Example 31) was produced.

Example 32

Other than "28.2 g of a formaldehyde 37% aqueous solution" was changed to "19.7 g of acetone" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 32) was produced.

Example 33

Other than "28.2 g of a formaldehyde 37% aqueous solution" was changed to "41.4 g of phenylboronic acid" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 33) was produced.

Example 34

Other than "28.2 g of a formaldehyde 37% aqueous solution" was changed to "24.4 g of 2-methoxypropene" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 34) was produced.

Example 35

Other than "28.2 g of a formaldehyde 37% aqueous solution" was changed to "30.5 g of dimethyl carbonate" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 35) was produced.

Example 36

Other than "28.2 g of a formaldehyde 37% aqueous solution" was changed to "35.3 g of 2,2-dimethoxypropane"

in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 36) was produced.

Example 37

Other than "81.1 g of acetic anhydride" was changed to "103.2 g of propionic anhydride" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 37) was produced.

Example 38

Other than "730 g of dimethylsulfoxide, 10.5 g of sulfuric acid 98%, 28.2 g of a formaldehyde 37% aqueous solution, and 81.1 g of acetic anhydride were added in a 2000 mL flask, and were stirred with a stirrer tip. Subsequently, 150 g of conifer wood chips derived from pines was added as lignocellulose in the above-described flask and was stirred for four hours at 95°C" was changed to "730 g of dimethylsulfoxide, 10.5 g of sulfuric acid 98%, 28.2 g of a formaldehyde 37% aqueous solution, and 150 g of conifer wood chips derived from pines were added in a 2000 mL flask in the order of the listed materials, were stirred for 30 minutes at 95°C, and thereafter, were added with 81.1 g of acetic anhydride and stirred for four hours at 95°C" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 38) was produced.

Example 39

Other than "730 g of dimethylsulfoxide, 10.5 g of sulfuric acid 98%, 28.2 g of a formaldehyde 37% aqueous solution, and 81.1 g of acetic anhydride were added in a 2000 mL flask, and were stirred with a stirrer tip. Subsequently, 150 g of conifer wood chips derived from pines was added as lignocellulose in the above-described flask and was stirred for four hours at 95°C" was changed to "730 g of dimethylsulfoxide, 10.5 g of sulfuric acid 98%, 28.2 g of a formaldehyde 37% aqueous solution, 150 g of conifer wood chips derived from pines, and 81.1 g of acetic anhydride were added in a 2000 mL flask in the order of the listed materials, were stirred for 30 minutes at 95°C, and thereafter, were additionally added with 81.1 g of acetic anhydride" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 39) was produced.

Example 40

Other than "730 g of dimethylsulfoxide, 10.5 g of sulfuric acid 98%, 28.2 g of a formaldehyde 37% aqueous solution, and 81.1 g of acetic anhydride were added in a 2000 mL flask, and were stirred with a stirrer tip. Subsequently, 150 g of conifer wood chips derived from pines was added as lignocellulose in the above-described flask and was stirred for four hours at 95°C" was changed to "730 g of dimethylsulfoxide, 10.5 g of sulfuric acid 98%, 28.2 g of a formaldehyde 37% aqueous solution, and 150 g of conifer wood chips derived from pines were added in a 2000 mL flask in the order of the listed materials, were stirred for 30 minutes at 95°C and the temperature was decreased to 45°C, and thereafter, they were additionally added with 81.1 g of acetic anhydride" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 40) was produced.

Example 41

Other than "was stirred for four hours at 95°C, and thus, the OH group in the cellulose component was sulfate-esterified and the OH group of the cellulose component and the OH group of the lignin component were cross-linked with a formaldehyde molecule by an acetal reaction. At this time, the absorbance at the wavelength of 500 nm of the solution diluted the reaction solution 20 times was confirmed to be 0.4" was changed to "was stirred for five hours at 95°C, and thus, the OH group in the cellulose component was sulfate-esterified and the OH group of the cellulose component and the OH group of the lignin component were cross-linked with a formaldehyde molecule by an acetal

reaction. At this time, the absorbance at the wavelength of 500 nm of the solution diluted the reaction solution 20 times was confirmed to be 0.5" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 41) was produced.

Example 42

Other than "150 g of conifer wood chips derived from pines was added as lignocellulose in the above-described flask" was changed to "35 g of conifer wood chips derived from pines was added as lignocellulose in the above-described flask" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 42) was produced.

Example 43

Other than "150 g of conifer wood chips derived from pines was added as lignocellulose in the above-described flask" was changed to "45 g of conifer wood chips derived from pines was added as lignocellulose in the above-described flask" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 43) was produced.

Example 44

Other than "150 g of conifer wood chips derived from pines was added as lignocellulose in the above-described flask" was changed to "364 g of conifer wood chips derived from pines was added as lignocellulose in the above-described flask" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 44) was produced.

Example 45

Other than "150 g of conifer wood chips derived from pines was added as lignocellulose in the above-described flask" was changed to "849 g of conifer wood chips derived from pines was added as lignocellulose in the above-described flask" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 45) was produced.

Example 46

Other than "150 g of conifer wood chips derived from pines was added as lignocellulose in the above-described flask" was changed to "1038 g of conifer wood chips derived from pines was added as lignocellulose in the above-described flask" in Example 2, a method similar to that in Example 2 was performed, and thus, a dumbbell sample comprising a formed body consisting of a sulfate-esterified cellulose nanofiber and lignin-derived substance complex (cross-linked complex) with a cellulose nanofiber solid content proportion of 50% (Example 46) was produced.

Example 47

730 g of dimethylsulfoxide, 10.5 g of sulfuric acid 98%, 28.2 g of a formaldehyde 37% aqueous solution, and 81.1 g of acetic anhydride were added to a 2000 mL flask and stirred with a stirrer tip. Subsequently, 150 g of conifer wood chips derived from pines was added as lignocellulose in the above-described flask, and then, they were stirred for four hours at 95°C. At this time, the absorbance at a wavelength of 500 nm of the solution diluted the reaction solution 20 times was confirmed to be 0.4. Subsequently, the solid component was extracted by filtering with a nylon mesh (PA-11μ, manufactured by AS ONE CORPORATION).

A 1 L flask was additionally prepared, and added with the extracted solid component, and furthermore, was added with 500 mL of sulfuric acid 58% and heated to 50°C. Subsequently, the solid component extracted by filtering with the nylon mesh was added in an additionally prepared 1 L flask and stirred for three hours. Subsequently, the content in the 1 L flask was treated for ten minutes at 20,000 G by a centrifugal separator (CT18R, manufactured by Eppendorf Himac Technologies Co., Ltd.). Subsequently, the supernatant liquid was removed by decantation, and

thereafter, 400 mL of distilled water was added and suspended the pellets. Subsequently, "centrifugal separator treatment-removal of supernatant liquid by decantation-pellet suspension by adding 400 ml of distilled water" was performed twice, and thus, a sulfate-esterified cellulose nanocrystal aqueous dispersion (Example 47) was produced.

Example 48

730 g of dimethylsulfoxide, 10.5 g of sulfuric acid 98%, 28.2 g of a formaldehyde 37% aqueous solution, and 81.1 g of acetic anhydride were added to a 2000 mL flask and stirred with a stirrer tip. Subsequently, 150 g of conifer wood chips derived from pines was added as lignocellulose in the above-described flask, and they were stirred for four hours at 95°C. At this time, the absorbance at a wavelength of 500 nm of the solution diluted the reaction solution 20 times was confirmed to be 0.4. Subsequently, a sodium hydroxide 40% aqueous solution was dropped to obtain pH 7, and the reaction was stopped. Subsequently, a solid component derived from cellulose was removed by filtering with a nylon mesh (PA-11μ, manufactured by AS ONE CORPORATION), and a soluble component in dark brown was obtained. Subsequently, 510 g of diethyl ether was added to the soluble component, a lignin-derived substance was precipitated, and a hemicellulose component was dissolved. Subsequently, the lignin-derived substance component was obtained by filtering with a nylon mesh (PA-11μ, manufactured by AS ONE CORPORATION). 2 g of the lignin-derived substance component, 1 g of ruthenium 5 weight% carbon, and 200 mL of THF were added in a pressure resistant reactor (Series 4560, manufactured by Parr Instrument Company), and a hydrogen gas was injected at an inlet pressure of 4 MPa. Subsequently, the pressure resistant reactor was heated for three hours at 200°C, and thereafter the temperature was decreased to a room temperature. Subsequently, a soluble component was obtained by removing the lignin-derived oligomer and the ruthenium carbon as solid components with a nylon mesh (PA-11μ, manufactured by AS ONE CORPORATION). Subsequently, a solvent was distilled away from the soluble component with an evaporator, and thus monolignol (Example 48) was obtained.

Example 49

Other than "Sample A" was changed to "Sample I" in Example 1, a method similar to that in Example 1 was performed, and thus, a dumbbell sample comprising a formed body consisting of a cellulose nanofiber having both a sulfate ester group and a carboxy group and lignin-derived substance complex (hydrogen-bonded complex) with a cellulose nanofiber solid content proportion of 50% (Example 49) was produced.

Example 50

Other than "Sample A" was changed to "Sample J" in Example 1, a method similar to that in Example 1 was performed, and thus, a dumbbell sample comprising a formed body consisting of a cellulose nanofiber having both a sulfate ester group and a phosphoester group and lignin-derived substance complex (hydrogen-bonded complex) with a cellulose nanofiber solid content proportion of 50% (Example 50) was produced.

Example 51

Other than "Sample A" was changed to "Sample K" in Example 1, a method similar to that in Example 1 was performed, and thus, a dumbbell sample comprising a formed body consisting of a cellulose nanofiber having both a sulfate ester group and an acetyl group and lignin-derived substance complex (hydrogen-bonded complex) with a cellulose nanofiber solid content proportion of 50% (Example 51) was produced.

Comparative Example 1

Other than "Sample A" was changed to "Sample F" in Example 1, a method similar to that in Example 1 was performed, and thus, a dumbbell sample comprising a formed body consisting of a TEMPO oxidized cellulose nanofiber and lignin-derived substance complex (hydrogen-bonded complex) with a cellulose nanofiber solid content proportion of 50% (Comparative Example 1) was produced.

Comparative Example 2

730 g of dimethylsulfoxide, 10.5 g of sulfuric acid 98%, and 28.2 g of a formaldehyde 37% aqueous solution, were added to a 2000 mL flask and stirred with a stirrer tip. Subsequently, 50 g of Sample F and 50 g of kraft lignin (manufactured by Sigma Aldrich, Indulin AT) were added in the above-described flask and were stirred for four hours at 95°C, and thus, a TEMPO oxidized cellulose nanofiber and lignin-derived substance complex (cross-linked complex)

was obtained by acetalization due to a formaldehyde molecule between the OH group in the TEMPO oxidized cellulose nanofiber molecules and the OH group of the kraft lignin. Subsequently, the obtained TEMPO oxidized cellulose nanofiber and lignin-derived substance complex was treated by the triple roll mill treatment similarly to Example 1, and a sheet-shaped formed body with a thickness of 20 μm was obtained. Subsequently, two obtained sheet-shaped formed bodies were stacked over both surfaces of one paper base material (qualitative filter paper No. 2, φ110 mm, thickness of 0.26 mm, manufactured by Advantec Co., LTD.) so as to sandwich the paper base material, and were heated and pressurized for two minutes with a press molding machine (4ton both tightening hydraulic press molding machine, manufactured by IWAKI INDUSTRY Co., Ltd) heated to 100°C, and thus, a sheet-shaped laminated body was made. Subsequently, the sheet-shaped laminated body was cut out into a dumbbell form similarly to Example 1, and thus, a dumbbell sample comprising a formed body consisting of a TEMPO oxidized cellulose nanofiber and lignin-derived substance complex (cross-linked complex) with a cellulose nanofiber solid content proportion of 50% (Comparative Example 2) was produced.

Comparative Example 3

Other than "Sample A" was changed to "Sample G" in Example 1, a method similar to that in Example 1 was performed, and thus, a dumbbell sample comprising a formed body consisting of a phosphate-esterified cellulose nanofiber and lignin-derived substance complex (hydrogen-bonded complex) with a cellulose nanofiber solid content proportion of 50% (Comparative Example 3) was produced.

Comparative Example 4

Other than "Sample F" was changed to "Sample G" in Comparative Example 2, a method similar to that in Comparative Example 2 was performed, and thus, a dumbbell sample comprising a formed body consisting of a phosphate-esterified cellulose nanofiber and lignin-derived substance complex (cross-linked complex) with a cellulose nanofiber solid content proportion of 50% (Comparative Example 4) was produced.

Comparative Example 5

Other than "Sample A" was changed to "Sample H" in Example 1, a method similar to that in Example 1 was performed, and thus, a dumbbell sample comprising a formed body consisting of an unmodified cellulose nanofiber and lignin-derived substance complex (hydrogen-bonded complex) with a cellulose nanofiber solid content proportion of 50% (Comparative Example 5) was produced.

Comparative Example 6

Other than "dimethylsulfoxide" was changed to "dimethylformamide" in Example 2 and the acetic anhydride was not added, a method similar to that in Example 2 was performed, and thus, a dumbbell sample comprising a formed body consisting of a cellulose nanofiber and lignin-derived substance complex with a cellulose nanofiber solid content proportion of 5% (Comparative Example 6) was produced.

Comparative Example 7

100 g of kraft lignin (manufactured by Sigma Aldrich, Indulin AT) was, while being heated to 100°C, passed four times through a triple roll mill (triple roll mill Type 1983, manufactured by Imoto machinery Co., LTD), and thus, a formed body consisting of a lignin-derived substance in a sheet shape with 20 μm thickness was produced. Subsequently, two obtained sheet-shaped formed bodies were stacked over both surfaces of one paper base material (qualitative filter paper No. 2, φ110 mm, thickness of 0.26 mm, manufactured by Advantec Co., LTD.) so as to sandwich the paper base material, and were heated and pressurized for two minutes with a press molding machine (4ton both tightening hydraulic press molding machine, manufactured by IWAKI INDUSTRY Co., Ltd) heated to 100°C, and thus, a sheet-shaped laminated body was made. Subsequently, the sheet-shaped laminated body was cut out with a sample cutting machine (SDL200, manufactured by DUMBBELL CO., LTD.) so as to obtain a test portion with a thickness of 0.26 mm, a width of 10 mm, and a length of 100 mm, and thus, a dumbbell sample comprising a formed body consisting of a lignin-derived substance (Comparative Example 7) was produced.

2. Evaluation of Samples

Breaking strengths, bending resistances, and monolignol collection amounts for the respective samples of Examples and Comparative Examples were evaluated in the following methods.

<Breaking Strength Evaluation>

The dumbbell samples (Examples 1 to 46 and 49 to 51, and Comparative Examples 1 to 7) were pulled with a grip distance of 50 mm, at a speed of 200 mm/min using a TENSILON RTF-2410 (manufactured by A&D Company, Limited.) according to Japanese Industrial Standard C-2151, ASTM-D-882, and breaking strengths when only the paper base materials (qualitative filter paper No. 2, cp110 mm, thickness of 0.26 mm, manufactured by Advantec Co., LTD.) in the dumbbell samples were cut (broken) and breaking strengths when portions other than the paper base materials (indicated as Examples 1 to 46 and 49 to 51, and Comparative Examples 1 to 7) were cut (broken) were respectively measured for three times, and the average values were obtained. Subsequently, for the obtained average values of the breaking strengths, increase rates of the breaking strengths of Examples 1 to 46 and 49 to 51, and Comparative Examples 1 to 7 to the breaking strengths for only the paper base materials {(breaking strengths of Examples 1 to 46 and 49 to 51, and Comparative Examples 1 to 7 / breaking strengths of only paper base materials) × 100} were obtained, and the breaking strengths were evaluated in the following criteria.

Excellent: increase rate of breaking strength was 200% or more
Good: increase rate of breaking strength was 100% or more and less than 200%
Fair: increase rate of breaking strength was 30% or more and less than 100%
Poor: increase rate of breaking strength was less than 30%

<Breaking Elongation Evaluation>

Center portions of the dumbbell samples (Examples 1 to 46 and 49 to 51, and Comparative Examples 1 to 7) were folded at 180 degrees and held with a stainless steel plate (cp110 mm, weight of 5 kg) for 30 seconds. After 30 seconds, the folding of the samples was released, and the bent portions of the samples were observed at magnification of 100X using an optical microscope (BX53M, manufactured by Olympus Corporation). The above-described "folding-observation" was repeated, and the number of folding until sample decay occurs was measured. The tests were performed three times for the respective samples, and the bending resistances were evaluated for the average values of the three tests in the following criteria.

Excellent: No sample decay was observed after folding for 20 times
Good: Sample decayed after folding for 15 times or more and 19 times or less
Fair: Sample decayed after folding for 5 times or more and 14 times or less
Poor: Sample decayed after folding for 4 times or less

<Monolignol Extraction Amount Evaluation>

A charge weight of the lignocellulose as a raw material and a weight of the monolignol collected in the end were measured with a precision balance TXC623N (manufactured by Shimadzu Corporation), a proportion {(weight of monolignol collected in the end / charge weight of lignocellulose) × 100} was obtained, and a monolignol extraction amount was evaluated.

Good: the proportion was 7% or more
Fair: the proportion was 5% or more and less than 7%
Poor: the proportion was less than 5%

3. Evaluation Result of Sample

(Modification Effect of Cellulose Nanofiber (CNF), Effect of Interaction between CNF and Lignin-Derived Substance, and Effect of Additive)

Table 1 shows the result.

[Table 1]

| Sample Name | Modification of CNF | Lignin-Derived Substance | Interaction between CNF and Lignin-Derived Substance | Composite Resin or Rubber | Inorganic Filler | Breaking Strength | Bending Resistance |
|---|---|---|---|---|---|---|---|
| Example 1 | Sulfate Ester Group | Present | Hydrogen Bonding | Absent | Absent | Good | Good |
| Example 2 | Sulfate Ester Group | Present | Cross-linkage | Absent | Absent | Excellent | Good |
| Example 3 | Sulfate Ester Group | Present | Hydrogen Bonding | Polyethylene | Absent | Good | Good |
| Example 4 | Sulfate Ester Group | Present | Cross-linkage | Polyethylene | Absent | Excellent | Excellent |
| Example 5 | Sulfate Ester Group | Present | Hydrogen Bonding | PHBH | Absent | Good | Good |
| Example 6 | Sulfate Ester Group | Present | Cross-Linkage | PHBH | Absent | Excellent | Excellent |
| Example 7 | Sulfate Ester Group | Present | Hydrogen Bonding | Natural Rubber | Absent | Excellent | Excellent |
| Example a | Sulfate Ester Group | Present | Cross-Linkage | Natural Rubber | Absent | Excellent | Excellent |
| Example 9 | Sulfate Ester Group | Present | Hydrogen Bonding | Absent | Silica | Excellent | Good |
| Example 10 | Sulfate Ester Group | Present | Cross-Linkage | Absent | Silica | Excellent | Good |
| Example 11 | Sulfate Ester Group | Present | Hydrogen Bonding | Polyethylene | Silica | Good | Good |
| Example 12 | Sulfate Ester Group | Present | Cross-Linkage | Polyethylene | Silica | Good | Good |
| Comparative Example 1 | Carboxy Group | Present | Hydrogen Bonding | Absent | Absent | Poor | Poor |
| Comparative Example 2 | Carboxy Group | Present | Cross-Linkage | Absent | Absent | Poor | Poor |

(continued)

| Sample Name | Modification of CNF | Lignin-Derived Substance | Interaction between CNF and Lignin-Derived Substance | Composite Resin or Rubber | Inorganic Filler | Breaking Strength | Bending Resistance |
|---|---|---|---|---|---|---|---|
| Comparative Example 3 | Phosphate ester group | Present | Hydrogen Bonding | Absent | Absent | Poor | Poor |
| Comparative Example 4 | Phosphate ester group | Present | Cross-linkage | Absent | Absent | Poor | Poor |
| Comparative Example 5 | No Modification | Present | Hydrogen Bonding | Absent | Absent | Poor | Poor |
| Comparative Example 6 | No Modification | Present | Cross-Linkage | Absent | Absent | Poor | Poor |
| Comparative Example 7 | (No CNF) | Present | Absent | Absent | Absent | Poor | Poor |

From Table 1, it was found that the sulfate-esterified CNF and lignin-derived substance had improved breaking strength and bending resistance compared with those of carboxylated CNF and lignin-derived substance complex, and phosphate-esterified CNF and lignin-derived substance complex, or unmodified CNF and lignin-derived substance complex. It was also found that the sulfate-esterified CNF and lignin-derived substance complex (cross-linked complex) had improved breaking strength and bending resistance compared with the sulfate-esterified CNF and lignin-derived substance complex (hydrogen bonding body). Furthermore, it was found that adding an additive, such as polyethylene, PHBH, and a natural rubber, to the sulfate-esterified CNF and lignin-derived substance complex allowed improvements in breaking strength and bending resistance.

(Effect of CNF Solid Content Proportion in Sulfate-esterified CNF and Lignin-Derived Substance Complex and Effect of CNF Fiber Width)

Table 2 shows the result.

[Table 2]

| Sample Name | Modification of CNF | Lignin-Derived Substance | Interaction between CNF and Lignin-Derived Substance | Composite Resin | Inorganic Filler | CNF Solid Content Proportion [Weight%] | CNF Fiber Width | Breaking Strength | Bending Resistance |
|---|---|---|---|---|---|---|---|---|---|
| Example 1 | Sulfate Ester Group | Present | Hydrogen Bonding | Absent | Absent | 50 | 10 | Good | Good |
| Example 13 | Sulfate Ester Group | Present | Hydrogen Bonding | Absent | Absent | 0.03 | 10 | Fair | Good |
| Example 14 | Sulfate Ester Group | Present | Hydrogen Bonding | Absent | Absent | 0.05 | 10 | Good | Good |
| Example 15 | Sulfate Ester Group | Present | Hydrogen Bonding | Absent | Absent | 5 | 10 | Good | Good |
| Example 16 | Sulfate Ester Group | Present | Hydrogen Bonding | Absent | Absent | 30 | 10 | Good | Good |
| Example 17 | Sulfate Ester Group | Present | Hydrogen Bonding | Absent | Absent | 80 | 10 | Good | Good |
| Example 18 | Sulfate Ester Group | Present | Hydrogen Bonding | Absent | Absent | 85 | 10 | Good | Fair |
| Example 2 | Sulfate Ester Group | Present | Cross-Linkage | Absent | Absent | 50 | 10 | Excellent | Good |
| Example 19 | Sulfate Ester Group | Present | Cross-Linkage | Absent | Absent | 5 | 10 | Excellent | Good |
| Example 20 | Sulfate Ester Group | Present | Hydrogen Bonding | Absent | Absent | 50 | a | Good | Good |
| Example 21 | Sulfate Ester Group | Present | Hydrogen Bonding | Absent | Absent | 50 | 50 | Good | Good |
| Example 22 | Sulfate Ester Group | Present | Hydrogen Bonding | Absent | Absent | 50 | 600 | Good | Good |
| Example 23 | Sulfate Ester Group | Present | Hydrogen Bonding | Absent | Absent | 50 | 650 | Fair | Good |
| Example 49 | Sulfate Ester Group Carboxy Group | Present | Hydrogen Bonding | Absent | Absent | 50 | 10 | Good | Good |

(continued)

| Sample Name | Modification of CNF | Lignin-Derived Substance | Interaction between CNF and Lignin-Derived Substance | Composite Resin | Inorganic Filler | CNF Solid Content Proportion [Weight%] | CNF Fiber Width | Breaking Strength | Bending Resistance |
|---|---|---|---|---|---|---|---|---|---|
| Example 50 | Sulfate Ester Group Phosphate ester group | Present | Hydrogen Bonding | Absent | Absent | 50 | 10 | Good | Good |
| Example 51 | Sulfate Ester Group Acetyl Group | Present | Hydrogen Bonding | Absent | Absent | 50 | 10 | Good | Good |

From Table 2, it was found that when the CNF solid content proportion in the sulfate-esterified CNF and lignin-derived substance complex was more than 0.03 weight% and less than 85 weight%, preferably 0.05 weight% to 80 weight%, further improvements could be made in breaking strength and bending resistance. It was also found that when the CNF fiber width was more than 600 nm, the breaking strength decreased. This is considered because the reduction of the specific surface area of the CNF in association with the increase of the CNF fiber width reduces interaction points with the lignin-derived substance. Furthermore, it was found that even though the sulfate-esterified CNF had a carboxy group, a phosphoester group, or an acetyl group as another substituent in addition to the sulfate ester group in the sulfate-esterified CNF and lignin-derived substance complex, satisfactory breaking strength and bending resistance were obtained.

(Effect of Mixing Method)

Table 3 shows the result.

[Table 3]

| Sample Name | Modification of CNF | Lignin-Derived Substance | Interaction between CNF and Lignin-Derived Substance | Composite Resin | Inorganic Filler | Shear Force during Mixing | Breaking Strength | Bending Resistance |
|---|---|---|---|---|---|---|---|---|
| Example 1 | Sulfate Ester Group | Present | Hydrogen Bonding | Absent | Absent | Present (Triple Roll Mill) | Good | Good |
| Example 24 | Sulfate Ester Group | Present | Hydrogen Bonding | Absent | Absent | Present (Biaxial Kneading) | Good | Good |
| Example 2 | Sulfate Ester Group | Present | Cross-Linkage | Absent | Absent | Present (Triple Roll Mill) | Excellent | Good |
| Example 25 | Sulfate Ester Group | Present | Cross-Linkage | Absent | Absent | Present (Biaxial Kneading) | Excellent | Good |
| Example 3 | Sulfate Ester Group | Present | Hydrogen Bonding | Polyethylene | Absent | Present (Triple Roll Mill) | Excellent | Excellent |
| Example 26 | Sulfate Ester Group | Present | Hydrogen Bonding | Polyethylene | Absent | Present (Biaxial Kneading) | Excellent | Excellent |
| Example 4 | Sulfate Ester Group | Present | Cross-Linkage | Polyethylene | Absent | Present (Triple Roll Mill) | Excellent | Excellent |
| Example 27 | Sulfate Ester Group | Present | Cross-Linkage | Polyethylene | Absent | Present (Biaxial Kneading) | Excellent | Excellent |
| Example 28 | Sulfate Ester Group | Present | Hydrogen Bonding | Absent | Absent | Absent (Melting) | Fair | Fair |
| Example 29 | Sulfate Ester Group | Present | Cross-Linkage | Absent | Absent | Absent (Melting) | Fair | Fair |
| Example 30 | Sulfate Ester Group | Present | Hydrogen Bonding | Polyethylene | Absent | Absent (Melting) | Fair | Good |
| Example 31 | Sulfate Ester Group | Present | Cross-Linkage | Polyethylene | Absent | Absent (Melting) | Fair | Good |

From Table 3, it was found that when the mixing with shear force application by, for example, a triple roll mill and biaxial kneading was employed for the mixing at the sulfate-esterified CNF and lignin-derived substance complex preparation, uniform dispersion was achieved, and thus, improvements was able to be made in breaking strength and bending resistance.

(Effect of Reagents (c) and (e))

Table 4 shows the result.

[Table 4]

| Sample Name | Modification of CNF | Lignin-Derived Substance | Interaction between CNF and Lignin-Derived Substance | Composite Resin | Reagent (c) | Reagent (e) | Breaking Strength | Bending Resistance | Monotignot Extraction |
|---|---|---|---|---|---|---|---|---|---|
| Example 2 | Sulfate Ester Group | Present | Cross-Linkage | Absent | Formaldehyde | Acetic Anhydride | Excellent | Good | Good |
| Example 32 | Sulfate Ester Group | Present | Cross-Linkage | Absent | Acetone | Acetic Anhydride | Excellent | Good | Good |
| Example 33 | Sulfate Ester Group | Present | Cross-Linkage | Absent | Boronic Add | Acetic Anhydride | Excellent | Good | Good |
| Example 34 | Sulfate Ester Group | Present | Cross-Linkage | Absent | 2-Methoxypropene | Acetic Anhydride | Excellent | Good | Good |
| Example 35 | Sulfate Ester Group | Present | Cross-Linkage | Absent | Dimethyl Carbonate | Acetic Anhydride | Excellent | Good | Good |
| Example 36 | Sulfate Ester Group | Present | Cross-Linkage | Absent | 2,2-Dimethoxypropane | Acetic Anhydride | Excellent | Good | Good |
| Example 37 | Sulfate Ester Group | Present | Cross-Linkage | Absent | Formaldehyde | Propionic Anhydride | Excellent | Good | Good |
| Comparative Example 6 | Absent | Present | Cross-Linkage | Absent | Formaldehyde | Absent | Poor | Poor | Poor |

From Table 4, it was found that formaldehyde as an aldehyde, acetone as a ketone, boronic acid, 2-methoxypropene, dimethyl carbonate, or 2,2-dimethoxypropane was usable for the reagent (c) and acetic anhydride or propionic anhydride was usable for the reagent (e). It was also found that without the reagent (e), an aldehyde formation by the Albright-Goldman oxidation reaction did not occur, and the chemical equilibrium was not biased to protection (acetalization), and therefore, the β-O-4 bond was condensed due to insufficient lignin-derived substance protection and the monolignol extraction was insufficient.

(Effect of Adding Method of Reagents and Effect at Reaction Stop)

Table 5 shows the result.

[Table 5]

| Sample Name | Modification of CNF | Lignin-Derived Substance | Interaction between CNF and Lignin-Derived Substance | Composite Resin | Reagent (a), (b), (c), (d), (e) Adding Method | Heating | Reaction Solution Absorbance 500 nm at Reaction Stop | Breaking Strength | Bending Resistance | Monolignol Extraction |
|---|---|---|---|---|---|---|---|---|---|---|
| Example 2 | Sulfate Ester Group | Present | Cross-Linkage | Absent | Adding at once | Across-the-board 95°C | 0.4 | Excellent | Good | Good |
| Example 38 | Sulfate Ester Group | Present | Cross-Linkage | Absent | Adding (d), (b), (c), (a), 30 minutes later, adding (e) | Across-the-board 95°C | 0.4 | Excellent | Excellent | Good |
| Example 39 | Sulfate Ester Group | Present | Cross-Linkage | Absent | Adding (d), (b), (c), (a), (e), 30 minutes later, additionally adding (e) | Across-the-board 95°C | 0.4 | Excellent | Excellent | Good |
| Example 40 | Sulfate Ester Group | Present | Cross-Linkage | Absent | Adding (d), (b), (c), (a), after temperature decrease, adding (e) | 95°C when a), b), c), d) were added, 45°C when e) was added | 0.4 | Excellent | Excellent | Good |
| Example 41 | Sulfate Ester Group | Present | Cross-Linkage | Absent | Adding at once | Across-the-board 95°C | 0.5 | Excellent | Good | Excellent |

From Table 5, it was found that an improvement can be made in bending resistance by adding the reagent (e) later than the reagents (a) to (d), additionally adding the reagent (e), or adding reagents (a) to (d), and after the temperature decrease, adding the reagent (e). It was also found that stopping the mixing (reaction) when the absorbance at 500 nm of the solution diluted the reaction solution 20 times became 0.5 or more allowed an improvement in monolignol extraction rate.

(Effect of Lignocellulose Amount based on Reaction System Total Quantity)

Table 6 shows the result.

[Table 6]

| Sample Name | Modification of CNF | Lignin-Derived Substance | Interaction between CNF and Lignin-Derived Substance | Composite Resin | Lignocellulose Amount [Pts. Wt.] to Reaction System Total Quantity | Breaking Strength | Extension | Monolignol Extraction |
|---|---|---|---|---|---|---|---|---|
| Example 2 | Sulfate Ester Group | Present | Cross-linkage | Absent | 15 | Excellent | Good | Good |
| Example 42 | Sulfate Ester Group | Present | Cross-Linkage | Absent | 4 | Excellent | Good | Fair |
| Example 43 | Sulfate Ester Group | Present | Cross-Linkage | Absent | 5 | Excellent | Good | Good |
| Example 44 | Sulfate Ester Group | Present | Cross-Linkage | Absent | 30 | Excellent | Good | Good |
| Example 45 | Sulfate Ester Group | Present | Cross-Linkage | Absent | 50 | Excellent | Good | Good |
| Example 46 | Sulfate Ester Group | Present | Cross-linkage | Absent | 55 | Excellent | Good | Fair |

From Table 6, it was found that an improvement can be made in monolignol extraction rate by making the lignocellulose amount based on the reaction system total quantity more than 4 pts.wt. (parts by weight) and less than 55 pts.wt., preferably, 5 pts.wt. to 50 pts.wt. It is considered because when the lignocellulose amount based on the reaction system total quantity is 4 pts.wt. or less, the yield is low, and when the lignocellulose amount based on the reaction system total quantity is 55 pts.wt. or more, the stirring efficiency drops.

(Production Effect of Lignocellulose-Derived Materials)

Table 7 shows the result.

[Table 7]

| Sample Name | Biomass-Derived Material (Product Derived from Lignocellulose) |
|---|---|
| Example 2 | Sulfate-Esterified CNF and Lignin-Derived Substance Complex |
| Example 47 | Sulfate-Esterified CNC |
| Example 48 | Monolignol |

From Table 7, it was found that the sulfate-esterified CNF and lignin-derived substance complex, the sulfate-esterified CNC, and the monolignol could be efficiently synthesized with the present invention.
All the published materials, patents, and patent applications cited herein are directly incorporated herein by reference.

## Claims

1. A composition comprising a cellulose nanofiber having a sulfate ester group and a lignin-derived substance.

2. The composition according to claim 1,
wherein the sulfate ester group of the cellulose nanofiber having the sulfate ester group is expressed by Chemical formula (1):

[Chem. 1]

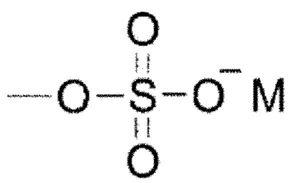

···(1)

(In the formula, M indicates a monovalent to trivalent cation).

3. The composition according to claim 1 or 2,
wherein the cellulose nanofiber having the sulfate ester group and the lignin-derived substance form a complex.

4. The composition according to claim 3,
wherein the complex is a complex in which the cellulose nanofiber having the sulfate ester group and the lignin-derived substance are hydrogen-bonded.

5. The composition according to claim 3,
wherein the complex is a complex in which the cellulose nanofiber having the sulfate ester group and the lignin-derived substance are cross-linked.

6. The composition according to any one of claims 1 to 5, further comprising:
at least one substance selected from the group consisting of resins and rubbers.

**7.** The composition according to any one of claims 1 to 6, further comprising:
at least one filler selected from the group consisting of organic fillers and inorganic fillers.

**8.** A method for producing the composition according to claim 4, comprising:
mixing the cellulose nanofiber having the sulfate ester group and the lignin-derived substance while shear force is applied.

**9.** A method for producing lignocellulose-derived materials comprising:

(A) a step of mixing:

(a) lignocellulose having a lignin content rate of 20 weight% or more based on a total weight of the lignocellulose;
(b) sulfuric acid;
(c) at least one compound selected from the group consisting of aldehydes, ketones, boronic acids, 2-methoxypropene, dimethyl carbonate, and 2,2-dimethoxypropane;
(d) dimethylsulfoxide as a solvent; and
(e) at least one carboxylic acid anhydride selected from the group consisting of acetic anhydride and propionic anhydride,

to prepare a mixture liquid and cause a reaction to obtain a reactant;
(B) a step of neutralizing the reactant obtained in Step (A) with a base to obtain a neutralized substance; and
(C) a step of separating the neutralized substance obtained in Step (B) into a first solid component and a first liquid component.

**10.** The method according to claim 9,
wherein in Step (A), a proportion of the lignocellulose in the mixture liquid is 5 weight% to 50 weight% based on a total weight of the mixture liquid.

**11.** The method according to claim 9 or 10,
wherein in Step (A), (b), (c), (a), and (e) are added into (d) in the listed order with time differences.

**12.** The method according to any one of claims 9 to 11,
wherein in Step (A), (b), (c), (a), and (e) are added into (d) in the listed order and are mixed for 30 minutes or more to cause a reaction, and thereafter, are additionally added with (e) to cause a reaction.

**13.** The method according to any one of claims 9 to 12,
wherein in Step (A), (b), (c), and (a) are added into (d) in the listed order, and then are mixed while being heated to 50°C or more to cause a reaction, and subsequently, are cooled down to 50°C or less, and thereafter are added with (e) to cause a reaction.

**14.** The method according to any one of claims 9 to 13,
wherein in Step (A), when an absorbance at a wavelength of 500 nm of a solution obtained by diluting a solution part in the reactant of (d), (b), (c), (a), and (e) 20 times becomes 0.5 or more, Step (B) is performed.

**15.** The method according to any one of claims 9 to 14, further comprising:
(D) a step of mixing a complex consisting of a cellulose having a sulfate ester group and a lignin-derived substance in which the cellulose having the sulfate ester group and the lignin-derived substance are cross-linked, comprised in the first solid component obtained in Step (C), and water or an organic solvent, or a mixture liquid thereof while shear force is applied, and defibrating the mixture to obtain a complex comprising a cellulose nanofiber having the sulfate ester group and the lignin-derived substance.

**16.** The method according to any one of claims 9 to 15, further comprising:
(D') a step of mixing a complex consisting of a cellulose having a sulfate ester group and a lignin-derived substance in which the cellulose having the sulfate ester group and the lignin-derived substance are cross-linked, comprised in the first solid component obtained in Step (C), water or an organic solvent, or a mixture liquid thereof, and sulfuric acid, and heating the mixture to obtain a sulfate-esterified cellulose nanocrystal.

**17.** The method according to any one of claims 9 to 16, further comprising:
(D") a step of mixing the first solid component obtained in Step (C) and a THF solvent to obtain a suspension and separating the obtained suspension into a second solid component comprising a cellulose and a second liquid component, and a step of depolymerizing an uncross-linked lignin-derived substance in the separated second liquid component to obtain monolignol.

**18.** A complex consisting of

a cellulose nanofiber having a sulfate ester group and a lignin-derived substance,
wherein the cellulose nanofiber having the sulfate ester group and the lignin-derived substance are interacted in the complex.

**19.** The complex according to claim 18,
wherein the cellulose nanofiber having the sulfate ester group and the lignin-derived substance are hydrogen-bonded.

**20.** The complex according to claim 18,
wherein the cellulose nanofiber having the sulfate ester group and the lignin-derived substance are cross-linked.

Fig. 1

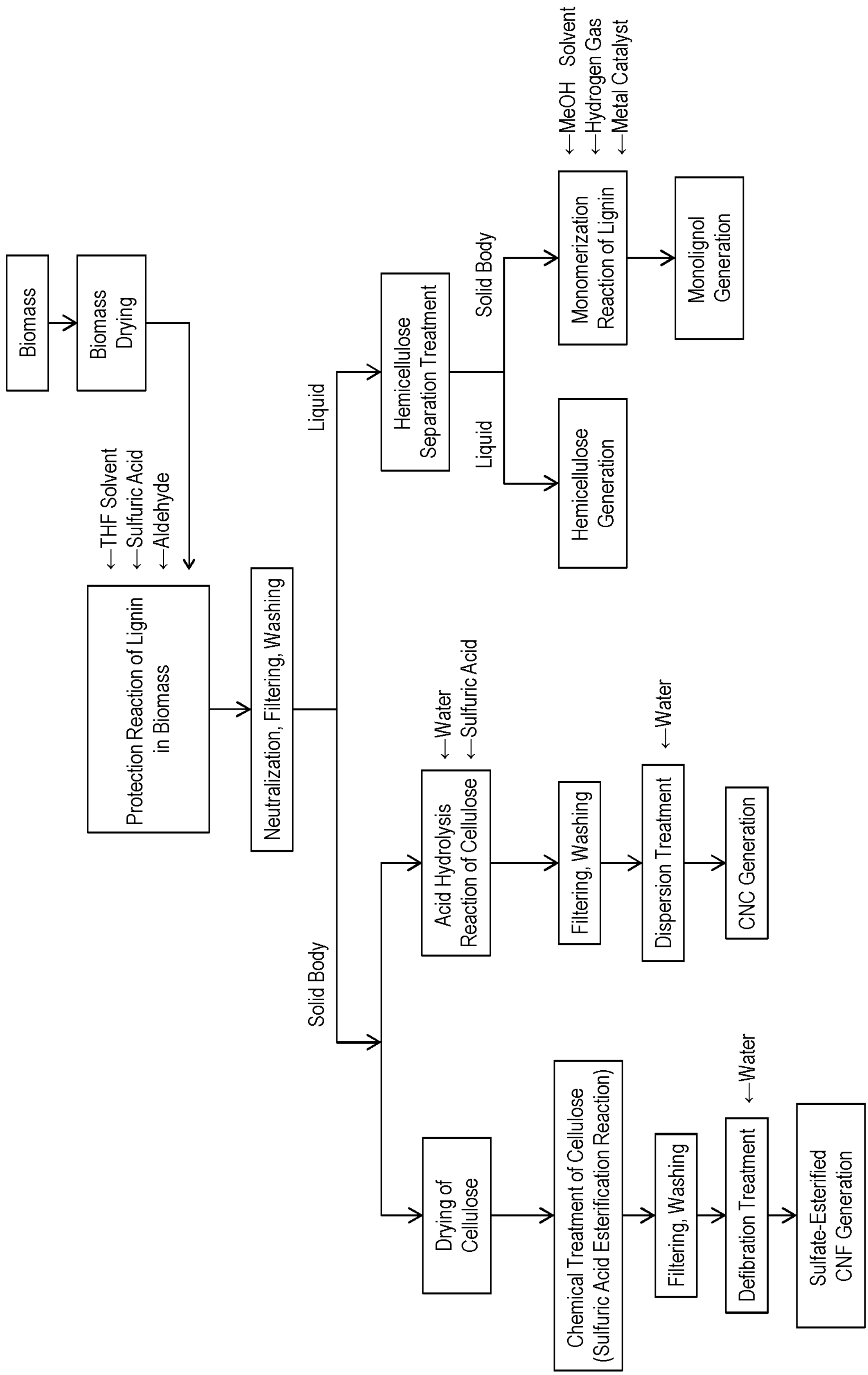
Biomass
Biomass Drying
←THF Solvent
←Sulfuric Acid
←Aldehyde
Protection Reaction of Lignin in Biomass
Neutralization, Filtering, Washing
Liquid
Solid Body
Hemicellulose Separation Treatment
Liquid
Solid Body
Hemicellulose Generation
Monomerization Reaction of Lignin
←MeOH Solvent
←Hydrogen Gas
←Metal Catalyst
Monolignol Generation
Acid Hydrolysis Reaction of Cellulose
←Water
←Sulfuric Acid
Filtering, Washing
Dispersion Treatment
←Water
CNC Generation
Drying of Cellulose
Chemical Treatment of Cellulose (Sulfuric Acid Esterification Reaction)
Filtering, Washing
Defibration Treatment
←Water
Sulfate-Esterified CNF Generation

Fig. 2

A

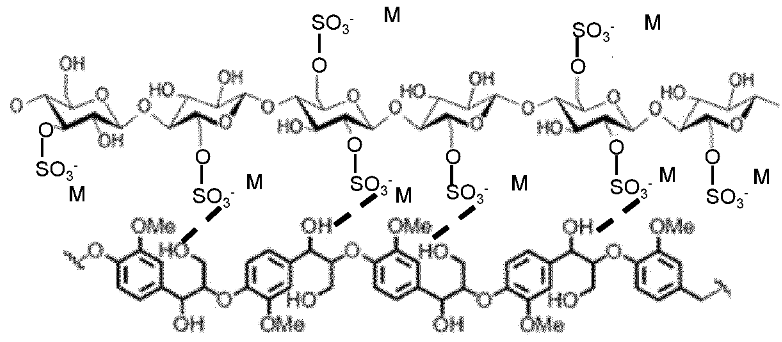

B

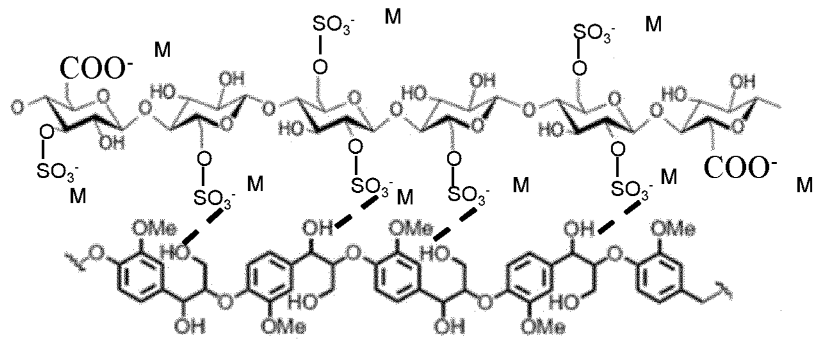

C

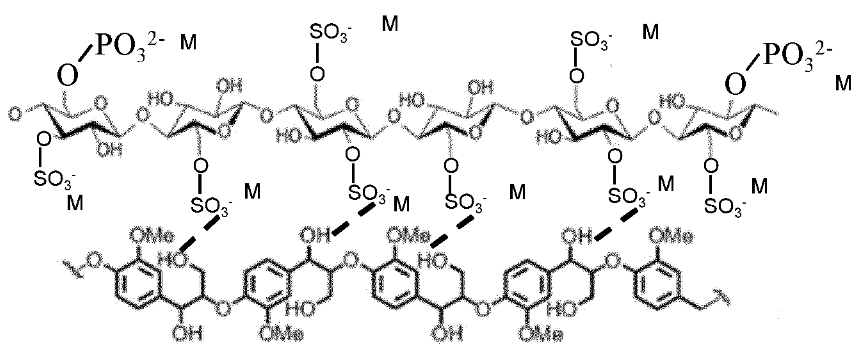

Fig. 3

D

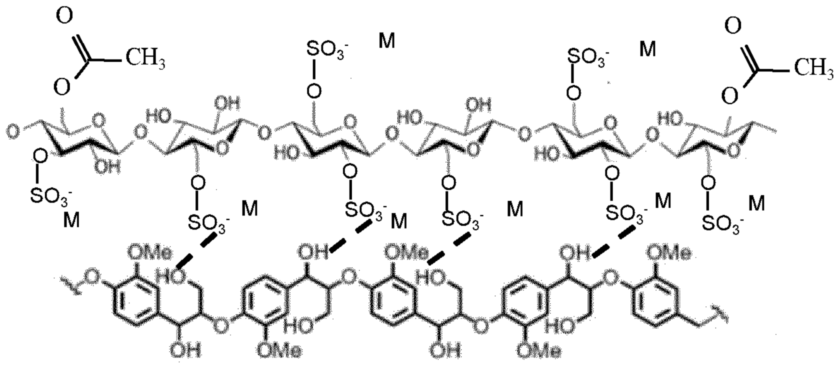

E

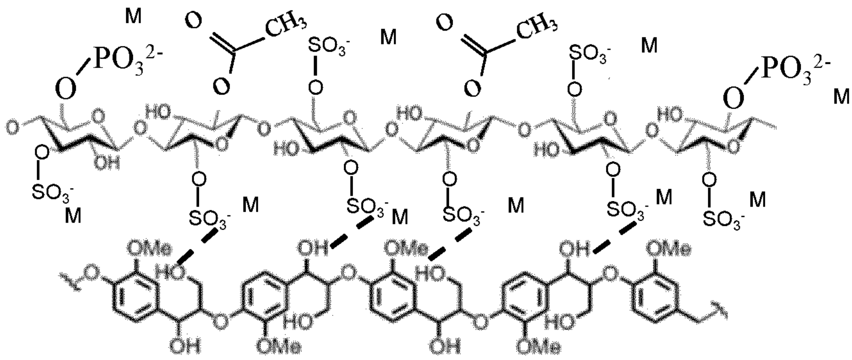

Fig. 4

F

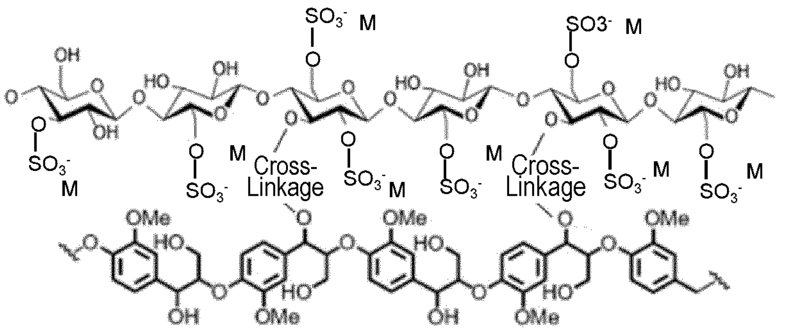

Fig. 5

G

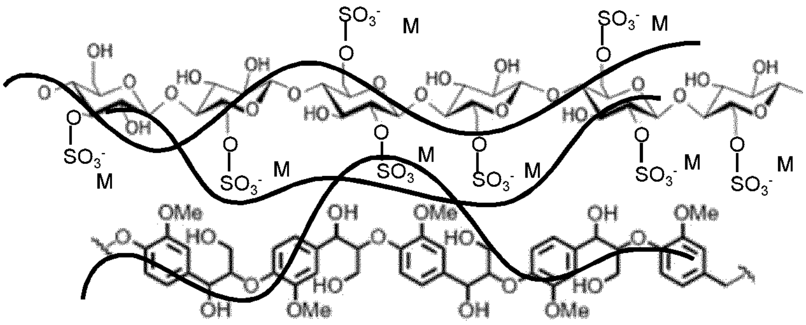

H

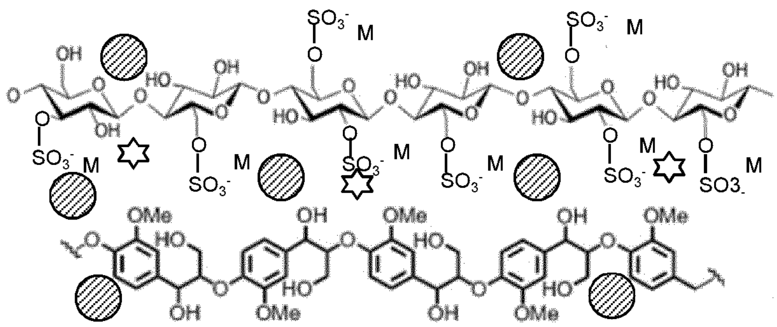

I

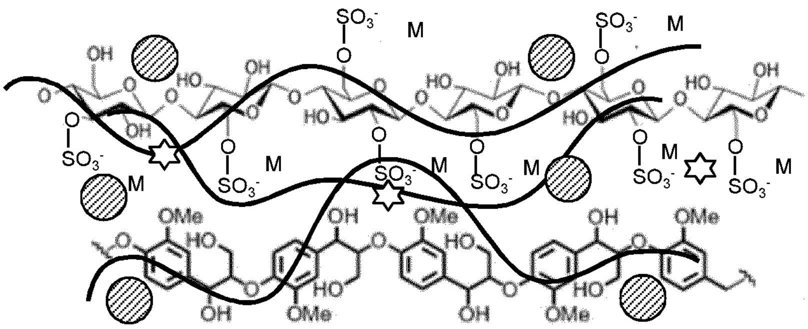

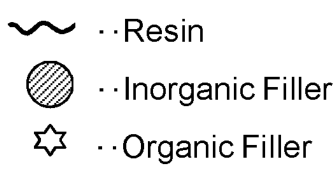

Fig. 6

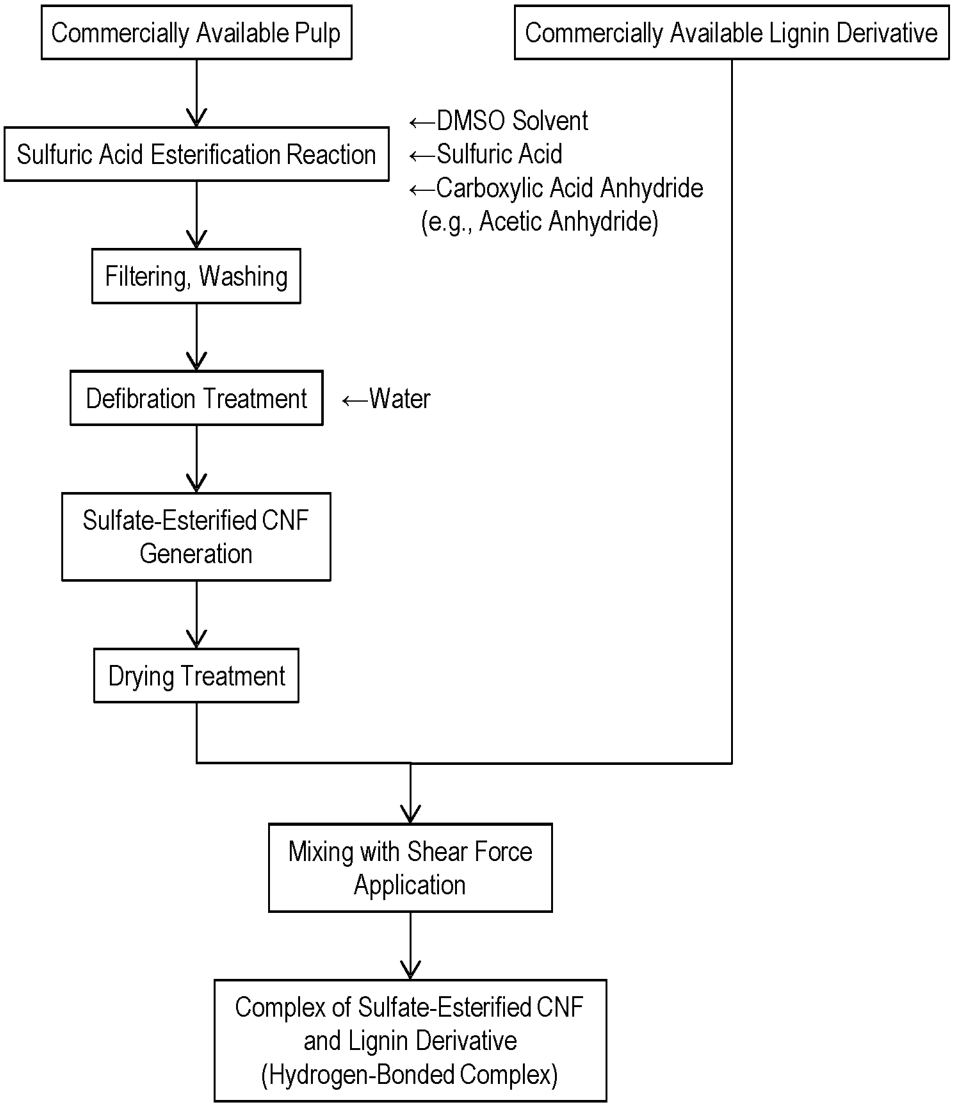
Commercially Available Pulp
Commercially Available Lignin Derivative
Sulfuric Acid Esterification Reaction
←DMSO Solvent
←Sulfuric Acid
←Carboxylic Acid Anhydride (e.g., Acetic Anhydride)
Filtering, Washing
Defibration Treatment
←Water
Sulfate-Esterified CNF Generation
Drying Treatment
Mixing with Shear Force Application
Complex of Sulfate-Esterified CNF and Lignin Derivative (Hydrogen-Bonded Complex)

Fig. 7

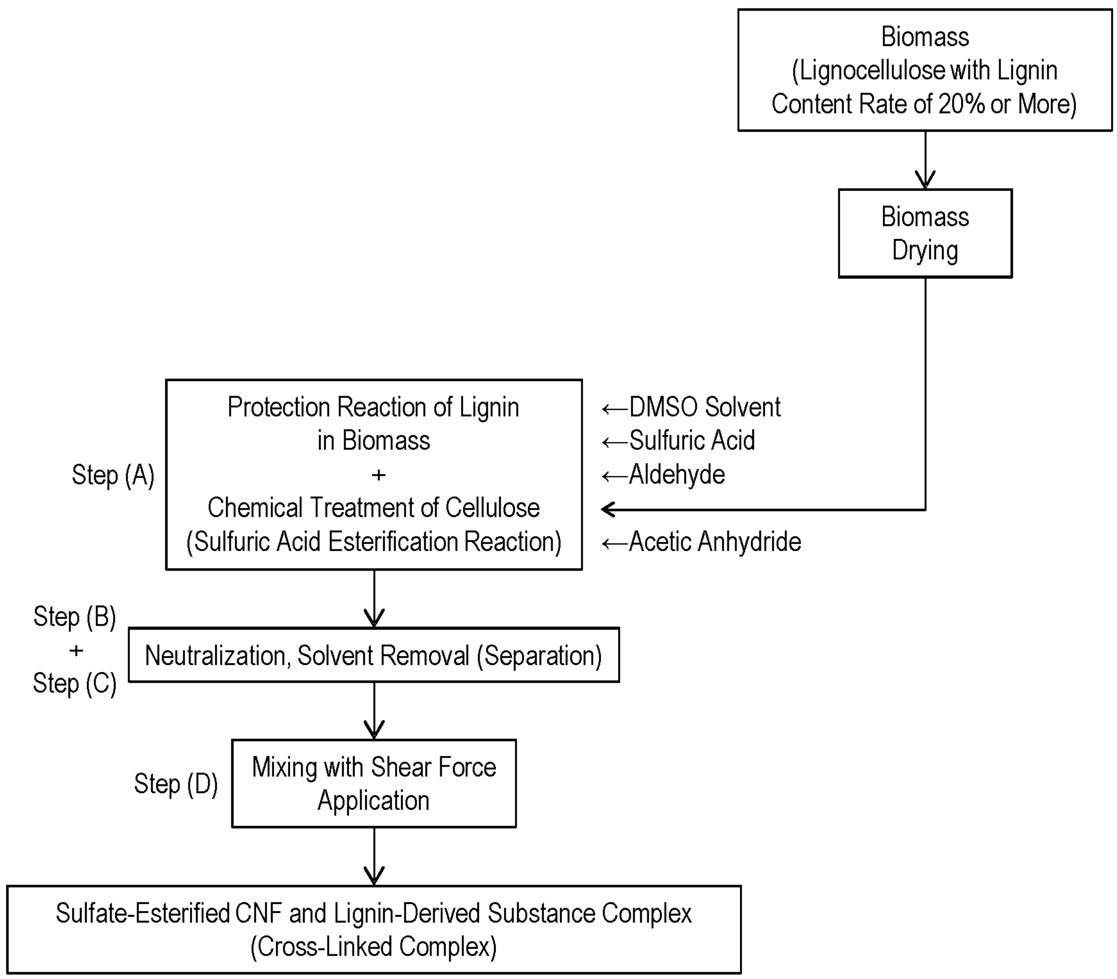
Biomass
(Lignocellulose with Lignin Content Rate of 20% or More)
Biomass Drying
Protection Reaction of Lignin in Biomass
+
Chemical Treatment of Cellulose
(Sulfuric Acid Esterification Reaction)
Step (A)
←DMSO Solvent
←Sulfuric Acid
←Aldehyde
←Acetic Anhydride
Step (B)
+
Step (C)
Neutralization, Solvent Removal (Separation)
Step (D)
Mixing with Shear Force Application
Sulfate-Esterified CNF and Lignin-Derived Substance Complex
(Cross-Linked Complex)

Fig. 8

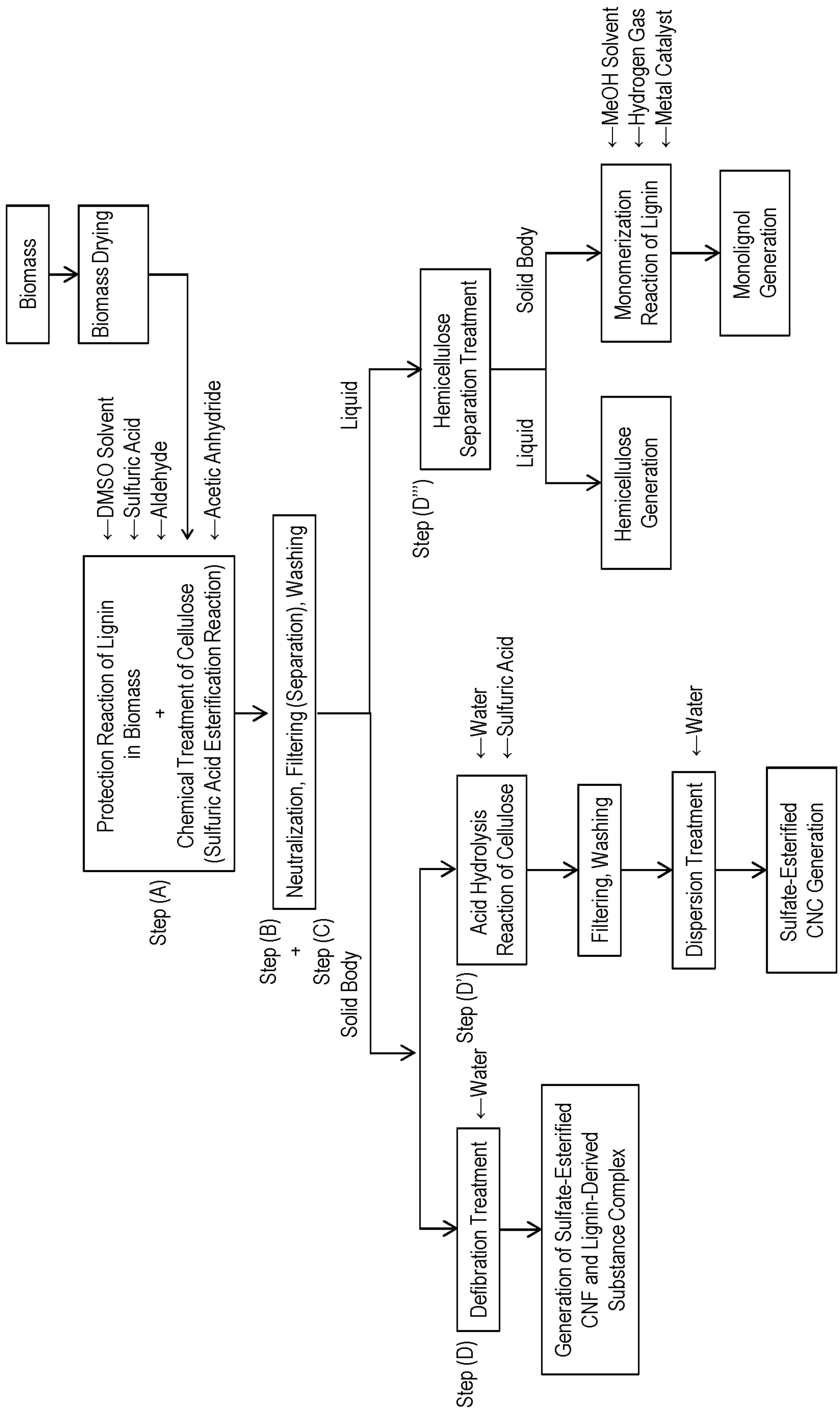
Biomass
Biomass Drying
←DMSO Solvent
←Sulfuric Acid
←Aldehyde
←Acetic Anhydride
Step (A)
Protection Reaction of Lignin in Biomass + Chemical Treatment of Cellulose (Sulfuric Acid Esterification Reaction)
Step (B) + Step (C)
Neutralization, Filtering (Separation), Washing
Liquid
Solid Body
Step (D''')
Hemicellulose Separation Treatment
Liquid
Solid Body
Hemicellulose Generation
←MeOH Solvent
←Hydrogen Gas
←Metal Catalyst
Monomerization Reaction of Lignin
Monolignol Generation
Step (D')
←Water
←Sulfuric Acid
Acid Hydrolysis Reaction of Cellulose
Filtering, Washing
←Water
Dispersion Treatment
Sulfate-Esterified CNC Generation
Step (D)
←Water
Defibration Treatment
Generation of Sulfate-Esterified CNF and Lignin-Derived Substance Complex

Fig. 9

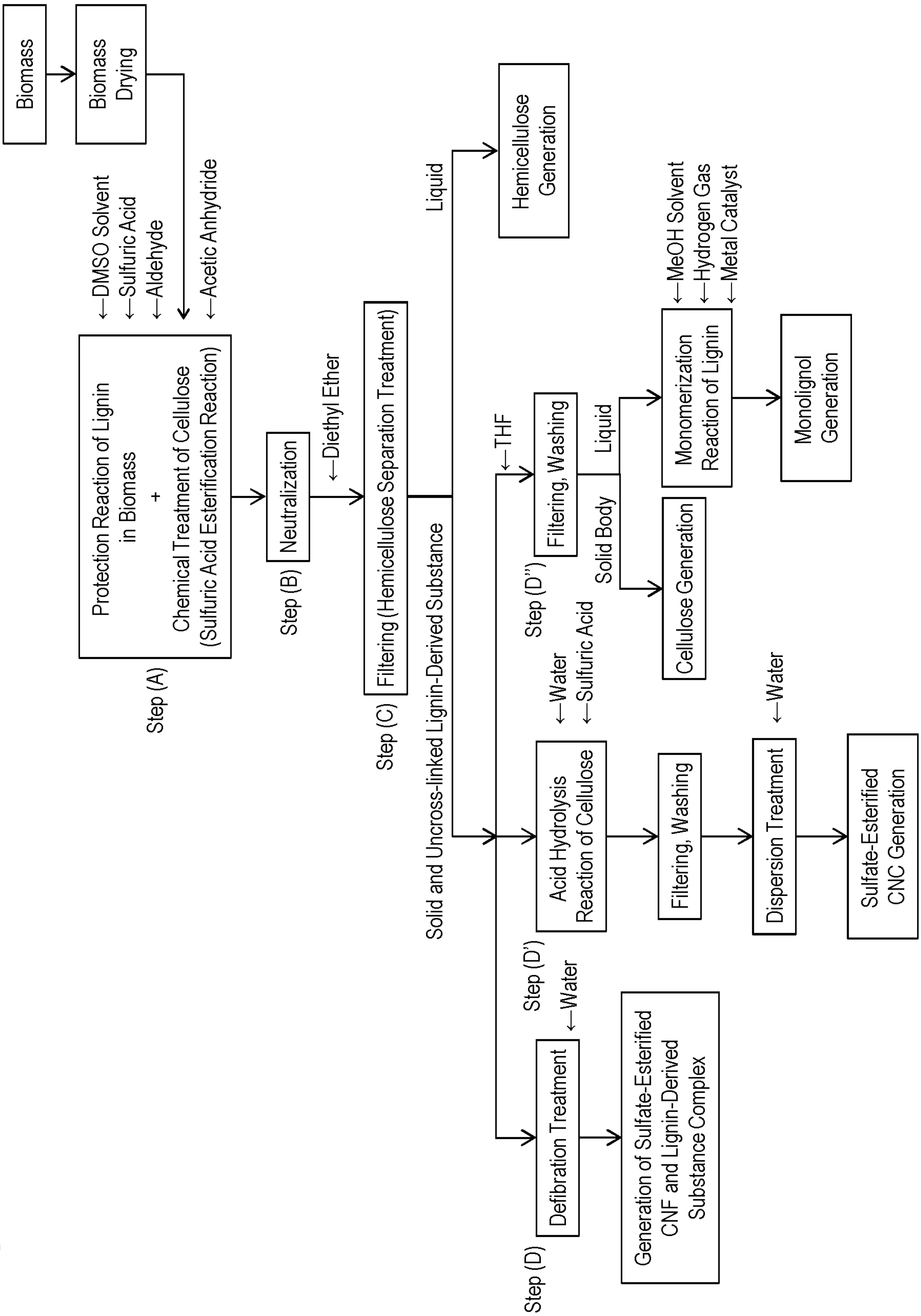
Biomass
Biomass Drying
←DMSO Solvent
←Sulfuric Acid
←Aldehyde
←Acetic Anhydride
Protection Reaction of Lignin in Biomass + Chemical Treatment of Cellulose (Sulfuric Acid Esterification Reaction)
Step (A)
Neutralization
Step (B)
←Diethyl Ether
Filtering (Hemicellulose Separation Treatment)
Step (C)
Liquid
Hemicellulose Generation
Solid and Uncross-linked Lignin-Derived Substance
←THF
Filtering, Washing
Step (D")
Liquid
Solid Body
Monomerization Reaction of Lignin
←MeOH Solvent
←Hydrogen Gas
←Metal Catalyst
Monolignol Generation
Cellulose Generation
←Water
←Sulfuric Acid
Acid Hydrolysis Reaction of Cellulose
Filtering, Washing
←Water
Dispersion Treatment
Sulfate-Esterified CNC Generation
Step (D')
←Water
Defibration Treatment
Step (D)
Generation of Sulfate-Esterified CNF and Lignin-Derived Substance Complex

Fig. 10

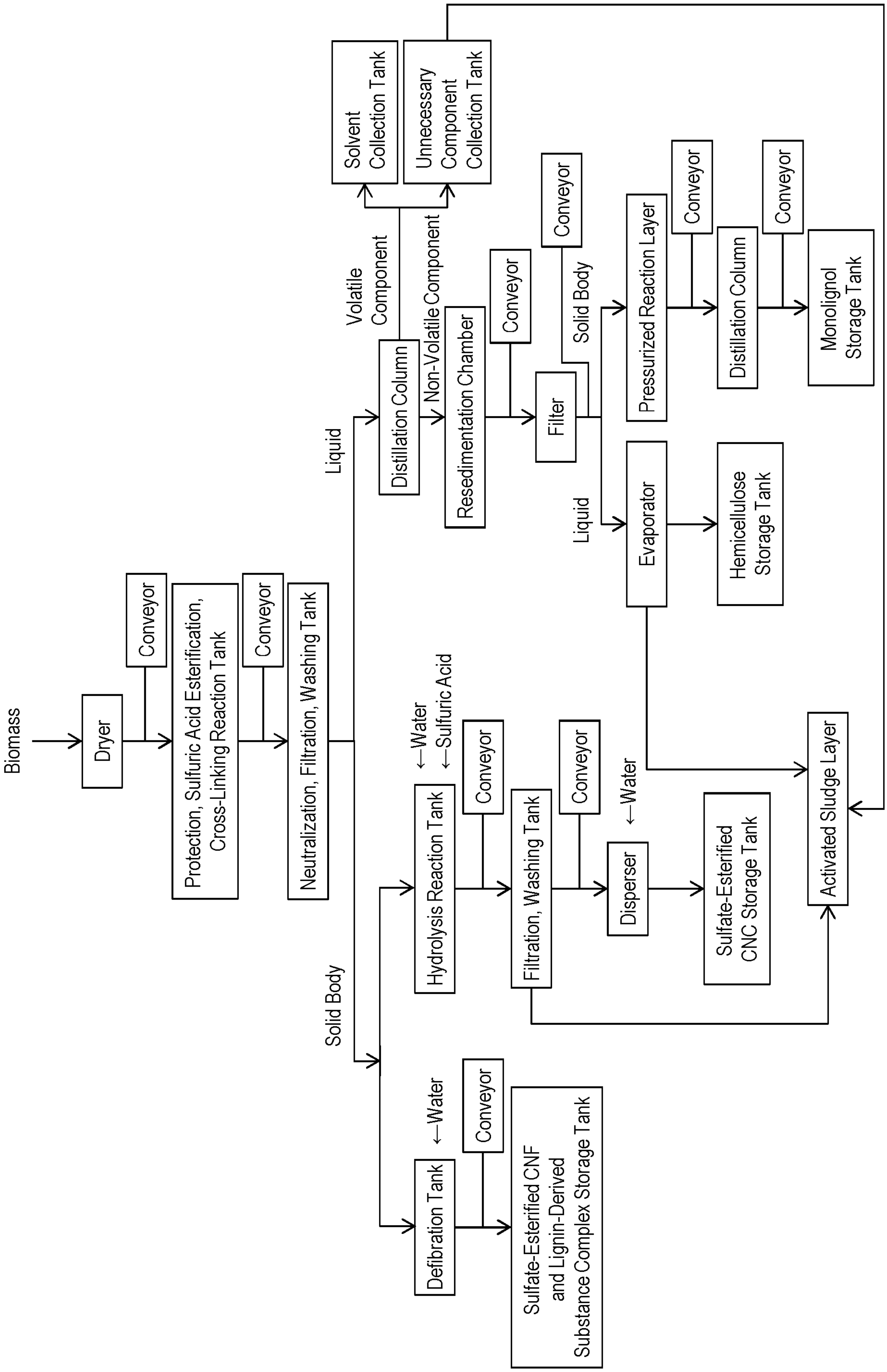
Biomass
Dryer
Conveyor
Protection, Sulfuric Acid Esterification, Cross-Linking Reaction Tank
Conveyor
Neutralization, Filtration, Washing Tank
Liquid
Distillation Column
Volatile Component
Solvent Collection Tank
Unnecessary Component Collection Tank
Non-Volatile Component
Resedimentation Chamber
Conveyor
Filter
Conveyor
Solid Body
Pressurized Reaction Layer
Conveyor
Distillation Column
Conveyor
Monolignol Storage Tank
Liquid
Evaporator
Hemicellulose Storage Tank
Solid Body
Hydrolysis Reaction Tank
←Water
←Sulfuric Acid
Conveyor
Filtration, Washing Tank
Conveyor
←Water
Disperser
Sulfate-Esterified CNC Storage Tank
Activated Sludge Layer
Defibration Tank
←Water
Conveyor
Sulfate-Esterified CNF and Lignin-Derived Substance Complex Storage Tank

Fig. 11

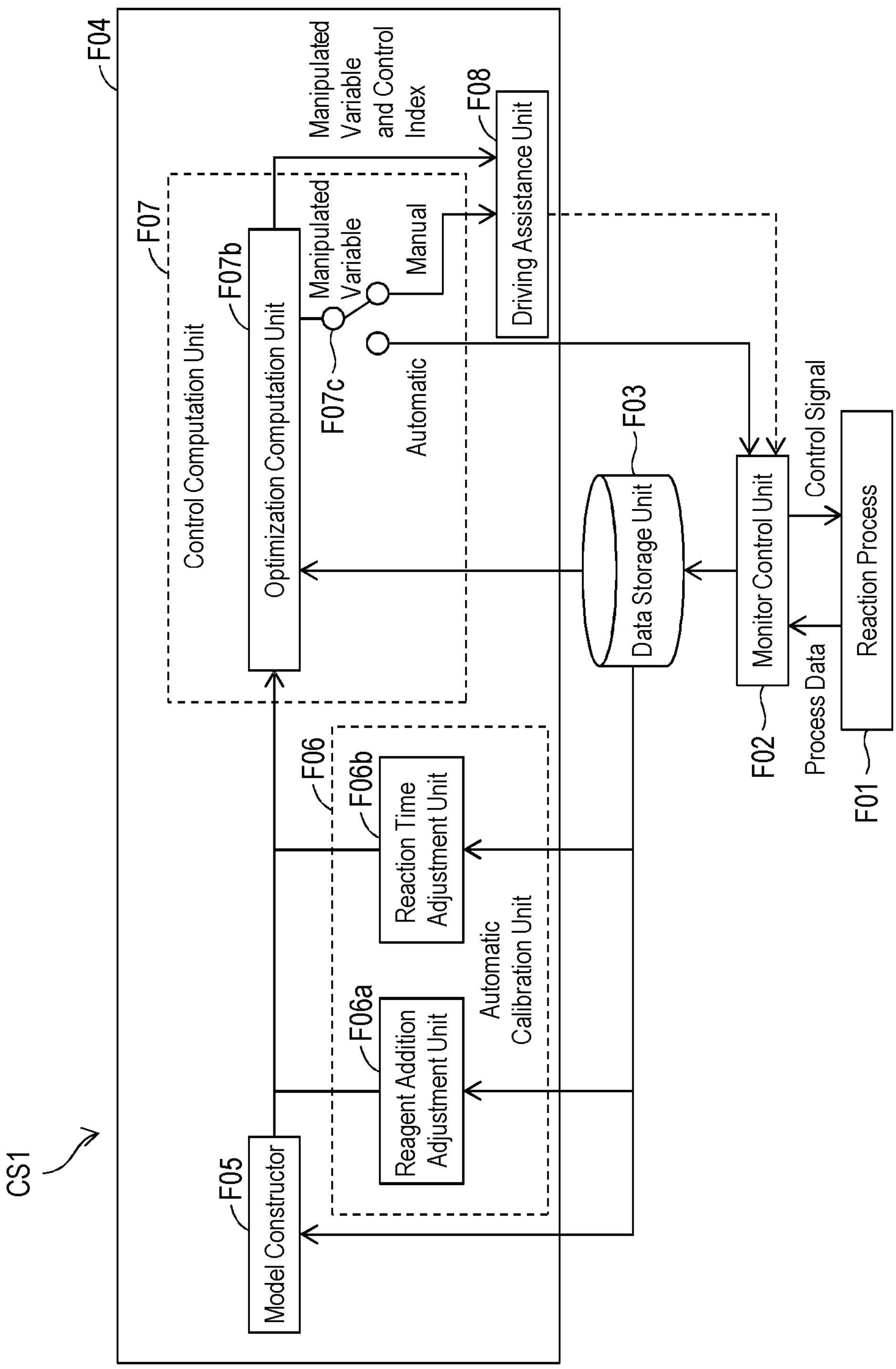
CS1
F04
F05
Model Constructor
F06
Automatic Calibration Unit
F06a
Reagent Addition Adjustment Unit
F06b
Reaction Time Adjustment Unit
F07
Control Computation Unit
F07b
Optimization Computation Unit
F07c
Manipulated Variable
Manual
Automatic
Manipulated Variable and Control Index
F08
Driving Assistance Unit
F03
Data Storage Unit
F02
Monitor Control Unit
Control Signal
Process Data
F01
Reaction Process

## INTERNATIONAL SEARCH REPORT

International application No. **PCT/JP2022/013378**

**A. CLASSIFICATION OF SUBJECT MATTER**

*D06M 101/06*(2006.01)n; ***C08L 1/16***(2006.01)i; ***C08L 97/00***(2006.01)i; ***C08L 101/00***(2006.01)i; ***C08J 5/04***(2006.01)i; ***C08K 3/013***(2018.01)i; ***C08B 5/14***(2006.01)i; ***D06M 11/55***(2006.01)i
FI: C08L1/16; D06M11/55; C08B5/14; C08L97/00; C08L101/00; C08K3/013; C08J5/04 CEZ; D06M101:06

According to International Patent Classification (IPC) or to both national classification and IPC

**B. FIELDS SEARCHED**

Minimum documentation searched (classification system followed by classification symbols)

D06M101/06; C08L1/16; C08L97/00; C08L101/00; C08J5/04; C08K3/013; C08B5/14; D06M11/55

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | US 2013/0303750 A1 (ZHU, Junyong) 14 November 2013 (2013-11-14)<br>claims, paragraphs [0035], [0041], [0047], examples | 1-4, 6-8, 18-19<br>5, 9-17, 20 |
| A | JP 2020-41255 A (KRI INC.) 19 March 2020 (2020-03-19)<br>entire text | 1-20 |
| A | JP 2008-308802 A (UNIV. OF TOKYO) 25 December 2008 (2008-12-25)<br>entire text | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/013378**

**Box No. III Observations where unity of invention is lacking (Continuation of item 3 of first sheet)**

This International Searching Authority found multiple inventions in this international application, as follows:

Invention 1: Claims 1-8, 15 and 18-20

Claims 1-8, 15 and 18-20 have the special technical feature of a "composition comprising sulfate ester group-containing cellulose nanofibers and a lignin-derived substance", and thus are classified as invention 1.

Invention 2: Claims 9-14 and 16-17

Claims 9-14 and 16-17 are not dependent on claim 1. Moreover, claims 9-14 and 16-17 are not substantially identical to or similarly closely related to any of the claims classified as invention 1.

Accordingly, claims 9-14 and 16-17 cannot be classified as invention 1.

Claims 9-14 and 16-17 have the special technical feature of a "method for producing a lignocellulose-derived material comprising the steps (A)-(C)", and thus are classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/013378**

| Patent document cited in search report | Publication date (day/month/year) | Patent family member(s) | Publication date (day/month/year) |
|---|---|---|---|
| US 2013/0303750 A1 | 14 November 2013 | (Family: none) | |
| JP 2020-41255 A | 19 March 2020 | US 2019/0367638 A1<br>entire text<br>WO 2018/131721 A1<br>EP 3569621 A1<br>CN 110446722 A | |
| JP 2008-308802 A | 25 December 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008308802 A
- JP 2020041255 A
- WO 2017178513 A
- WO 2012014213 A
- JP 2021059316 A


### Non-patent literature cited in the description


- **WANGXIA WANG et al.** Lignin Redistribution for Enhancing Barrier Properties of Cellulose-Based Materials. *Polymers,* 2019, vol. 11, 1929
- **UMESH AGARWAL et al.** Production of high lignin-containing and lignin-free cellulose nanocrystals from wood. *Cellulose,* 2018, vol. 25, 5791